# EUROPÄISCHE PATENTSCHRIFT

(11) **EP 3 957 615 B1**
(45) Veröffentlichungstag und Bekanntmachung des Hinweises auf die Patenterteilung: **09.12.2026**
(21) Anmeldenummer: 20191910.7
(22) Anmeldetag: 20.08.2020
(51) Int. Cl.: C04B 24/02, C04B 28/06, C04B 28/14, C04B 28/16

(54) **VERWENDUNG VON POLYOL ZUR VERRINGERUNG DES SCHWINDENS VON BAUCHEMISCHEN ZUSAMMENSETZUNGEN**
USE OF POLYOL FOR REDUCING THE SHRINKAGE OF CHEMICAL COMPOSITIONS
UTILISATION DE POLYOL POUR RÉDUIRE LE RETRAIT DES COMPOSITIONS CHIMIQUES DE CONSTRUCTION

(43) Veröffentlichungstag der Anmeldung: 23.02.2022
(60) Teilanmeldung: 26215557.5
(73) Patentinhaber: SIKA TECHNOLOGY AG, 6340 Baar (CH)
(72) Erfinder: Knoebel, Markus, 48653 Coesfeld (DE); Schneider, Nick, 48727 Billerbeck (DE)
(74) Vertreter: Sika Patent Attorneys

(56) Entgegenhaltungen:
- EP-A1- 2 767 521
- WO-A1-2020/244981
- KR-B1- 100 943 308

## Beschreibung

### Technisches Gebiet

Die vorliegende Erfindung befasst sich mit der Verwendung von Polyol mit einer Funktionalität von 4 oder kleiner und einer Dichte an OH-Gruppen von mindestens 0.033 mol OH pro g Polyol als Mittel zur Verringerung des Schwindens von bauchemischen Zusammensetzungen basierend auf einem hydraulischen Bindemittel, wobei das Polyol ausgewählt ist aus Erythritol. Das hydraulische Bindemittel ist dabei ein sogenanntes binäres oder ternäres Bindemittel umfassend a) Aluminatzement und/oder Calciumsulfoaluminatzement, b) Calciumsulfat und c) optional Portlandzement. Die vorliegende Erfindung betrifft auch schwundreduzierte bauchemische Zusammensetzungen umfassend binäre oder ternäre hydraulische Bindemittel und Polyol mit einer Funktionalität von 4 oder kleiner und einer Dichte an OH-Gruppen von mindestens 0.033 mol OH pro g Polyol, wobei das Polyol ausgewählt ist aus Erythritol.

### Stand der Technik

Es ist lange bekannt, dass mineralische Bindemittelzusammensetzungen, insbesondere Zement-basierte Bindemittelzusammensetzungen, während des Abbinde- und Trocknungsprozesses einer Volumenänderung, meist einem Schwinden, unterliegen. Diese Volumenänderung, insbesondere das Schwinden, ist für die Gebrauchstauglichkeit, für die Dauerhaftigkeit und für die Festigkeit des erhärteten Baustoffes von großer Bedeutung, da sie z.B. häufig die Ursache für die Bildung von Rissen oder die Aufwölbung von Estrichen ist. Durch Risse gelangen z.B. Wasser, gelöste Salze und Luft in das Innere des Betons, Mörtels, Estrichs oder der Schlämme und fördern z.B. die Korrosion in Stahlbetonkonstruktionen.

Die Bauindustrie versucht daher, durch verschiedenste Maßnahmen die Maßhaltigkeit zu gewährleisten und insbesondere das Trockenschwinden auf ein Minimum zu begrenzen. Nicht nur über die Art der Bauausführung und die Wahl optimierter Zement-basierter Bindemittelzusammensetzungen wird versucht, dem Schwinden entgegenzuwirken, sondern in letzter Zeit in verstärktem Maße auch über die Zugabe von Additiven. Anfang der 1980er Jahre wurden in Japan die ersten Schwindreduzierer entwickelt und erfolgreich eingesetzt. Seitdem hat sich der Einsatz verschiedener Schwindreduzierer als Zusatzmittel verbreitet.

So wird in der WO 2014/053341 eine hydraulische Zusammensetzung beschrieben, welche bestimmte Terpenalkohol als Schwindreduzierer enthält. Die WO 2014/053341 enthält darüber hinaus eine umfangreiche Auflistung an Literaturstellen, in welchen verschiedene Alkohole als Schwindreduzierer beschrieben werden.

Die JP S4-843014 beschreibt die Verwendung von Glykol oder Glycerin als Schwindreduzierer in einer Zement-basierten Bindemittelzusammensetzung. Wie allerdings beispielsweise aus DE 69314508 bekannt ist, wirkt insbesondere Glycerin als Abbindebeschleuniger für Portlandzement-basierte Mischungen.

Die JP 2003-30636 beschreibt ein pulverförmiges Mittel zur Reduktion des Schwindens, bestehend aus einem Zuckeralkohol, insbesondere Sorbitol und Mannitol, und einem flüssigen, organischen Schwindreduzierer, beispielsweise alkoxylierte Alkohole oder Alkanolamine.

Die EP2767521 offenbart eine schwindreduzierte Bindemittelzusammensetzung umfassend Portlandzement, wasserfreies Calciumsulfat, einen Calciumsulfoaluminatzement und Glycerin

Die KR 100943308 offenbart eine ternäre Bindemittelzusammesetzung umfassend einen schnell abbindenden Zement, Aluminatzement, Gips und Glycerin.

Unter anderem im Fussbodenbereich gibt es in den letzten Jahren eine Tendenz zur Verwendung von sogenannten binären und ternären Bindemitteln zur Formulierung von Baumaterialien, beispielsweise von Estrichen. Binäre Bindemittel sind vorliegend hydraulische Bindemittel welche Aluminatzement oder Calciumsulfoaluminatzement sowie Calciumsulfat umfassen oder im Wesentlichen daraus bestehen. Ternäre Bindemittel sind vorliegend hydraulische Bindemittel, welche Aluminatzement oder Calciumsulfoaluminatzement, Calciumsulfat und Portlandzement umfassen oder im Wesentlichen daraus bestehen. Binäre und ternäre Bindemittel haben vor allem den Vorteil einer verkürzten Dauer bis zur Belegreife im Vergleich zu Bindemitteln basierend auf Normalzement. Dies bedeutet, dass innerhalb einer kürzeren Zeit weitergearbeitet werden kann, was ein entscheidender ökonomischer Vorteil ist. Binäre und ternäre Bindemittel zeichnen sich darüber hinaus oftmals durch ein geringeres Schwinden aus als Bindemittel basierend auf Normalzement.

Allerdings ist für viele Anwendungen, z.B. Estriche, das Schwinden von bauchemischen Zusammensetzungen basierend auf binären oder ternären Bindemitteln noch zu hoch. Es werden daher Mittel und Wege benötigt, um das Schwinden solcher bauchemischen Zusammensetzungen weiter zu reduzieren.

### Darstellung der Erfindung

Aufgabe der vorliegenden Erfindung ist es daher, das Schwinden von bauchemischen Zusammensetzungen basierend auf hydraulischen Bindemitteln umfassend
a) Aluminatzement und/oder Calciumsulfoaluminatzement,
b) Calciumsulfat, und
c) optional Portlandzement zu verringern.

Aufgabe der vorliegenden Erfindung ist es weiterhin bauchemische Zusammensetzungen basierend auf hydraulischen Bindemitteln umfassend
a) Aluminatzement und/oder Calciumsulfoaluminatzement,
b) Calciumsulfat, und
c) optional Portlandzement,
welche ein verringertes Schwinden aufweisen, zur Verfügung zu stellen

Es hat sich überraschenderweise gezeigt, dass die Aufgaben der vorliegenden Erfindung durch die Verwendung mindestens eines Polyols mit einer Funktionalität von 4 oder kleiner und einer Dichte an OH-Gruppen von mindestens 0.033 mol OH pro g Polyol, wobei das Polyol ausgewählt ist aus Erythritol, wie in Anspruch 1 beschrieben gelöst werden kann.

Es hat sich insbesondere gezeigt, dass die Verwendung mindestens eines Polyols mit einer Funktionalität von 4 oder kleiner und einer Dichte an OH-Gruppen von mindestens 0.033 mol OH pro g Polyol in einer bauchemischen Zusammensetzung basierend auf einem hydraulischen Bindemittel umfassend
a) Aluminatzement und/oder Calciumsulfoaluminatzement,
b) Calciumsulfat, und
c) optional Portlandzement
das Schwinden dieser bauchemischen Zusammensetzung signifikant verringert im Vergleich zu derselben bauchemischen Zusammensetzung, welche kein solches Polyol enthält, bzw. ohne die Zugabe von mindestens einem solchen Polyol.

Es ist insbesondere vorteilhaft, dass das Schwinden einer bauchemischen Zusammensetzung durch die erfindungsgemässe Verwendung mindestens eines Polyols mit einer Funktionalität von 4 oder kleiner und einer Dichte an OH-Gruppen von mindestens 0.033 mol OH pro g Polyol unter verschiedenen klimatischen Bedingungen verringert wird. Beispielsweise ist das Schwinden einer erfindungsgemässen bauchemischen Zusammensetzung in einem Bereich von 5°C - 50°C und speziell bei 20°C - 30°C und einer relativen Feuchte von 55% - 90% verringert.

Es ist ein weiterer Vorteil der vorliegenden Erfindung, dass Polyole mit einer Funktionalität von 4 oder kleiner und einer Dichte an OH-Gruppen von mindestens 0.033 mol OH pro g Polyol nicht wesentlich zur Emission von VOC (volatile organic substances) aus den bauchemischen Zusammensetzungen beitragen. Insbesondere wird durch die Verwendung solcher Polyole der TVOC-Gehalt (total volatile organic substances Gehalt) im Wesentlichen nicht erhöht. Dies ist ein wichtiger Vorteil gegenüber anderen kommerziell erhältlichen Schwundreduzierern.

Ein weiterer Vorteil der erfindungsgemässen Verwendung mindestens eines Polyols mit einer Funktionalität von 4 oder kleiner und einer Dichte an OH-Gruppen von mindestens 0.033 mol OH pro g Polyol, wobei das Polyol ausgewählt ist aus Erythritol, als Schwundreduzierer ist, dass diese die Verarbeitbarkeit bauchemischer Zusammensetzungen nicht wesentlich verändern. Insbesondere ist der Wasseranspruch, also die Menge Wasser, die zur Einstellung einer bestimmten Fliessfähigkeit benötigt wird, einer bauchemischen Zusammensetzung enthaltend mindestens ein solches Polyol, nicht höher, als der Wasseranspruch derselben bauchemischen Zusammensetzung ohne solche Polyole.

### Wege zur Ausführung der Erfindung

In einem ersten Aspekt bezieht sich die vorliegende Erfindung daher auf die Verwendung mindestens eines Polyols mit einer Funktionalität von 4 oder kleiner und einer Dichte an OH-Gruppen von mindestens 0.033 mol OH pro g Polyol, wobei das Polyol ausgewählt ist aus Erythritol, zur Verringerung des Schwindens einer bauchemischen Zusammensetzung basierend auf einem hydraulischen Bindemittel umfassend
a) Aluminatzement und/oder Calciumsulfoaluminatzement,
b) Calciumsulfat, und
c) optional Portlandzement.

Es ist besonders bevorzugt, genau ein Polyol zu verwenden, wobei das Polyol einer Funktionalität von 4 oder kleiner und eine Dichte an OH-Gruppen von mindestens 0.033 mol OH pro g Polyol aufweist, wobei das Polyol ausgewählt ist aus Erythritol.

Unter dem Begriff «Schwinden» wird vorliegend die Volumenreduktion einer bauchemischen Zusammensetzung während des Abbinde- und Trocknungsprozesses verstanden. Das Schwinden einer bauchemischen Zusammensetzung kann vorliegend gemäss Norm EN 13872:2004-04 gemessen werden. Eine Verringerung des Schwindens bedeutet vorliegend, dass durch die erfindungsgemässe Verwendung mindestens eines Polyols mit einer Funktionalität von 4 oder kleiner und einer Dichte an OH-Gruppen von mindestens 0.033 mol OH pro g Polyol, wobei das Polyol ausgewählt ist aus Erythritol, in einer bauchemischen Zusammensetzung das Schwinden dieser bauchemischen Zusammensetzung während des Abbinde- und Trocknungsprozesses kleiner ist, als das Schwinden derselben bauchemischen Zusammensetzung ohne die Verwendung solcher Polyole. Polyole, welche im Rahmen der vorliegenden Offenbarung eingesetzt werden können sind gekennzeichnet durch
a) eine Funktionalität von 4 oder kleiner und
b) eine Dichte an OH-Gruppen von mindestens 0.033 mol OH pro g Polyol,
wobei erfindungsgemäss das Polyol ausgewählt ist aus Erythritol.

Die Funktionalität der Polyole entspricht dabei der Menge OH-Gruppen in mol pro mol Substanz. Bevorzugt ist die Funktionalität der Polyole grösser als 1, insbesondere grösser als 2.

Die Dichte an OH-Gruppen der Polyole wird berechnet aus der Funktionalität des jeweiligen Polyols geteilt durch dessen Molmasse. Gemäss besonderer Ausführungsformen haben die erfindungsgemässen Polyole eine Dichte an OH-Gruppen von 0.033 mol OH pro g Polyol.

Im Rahmen der vorliegenden Erfindung ist mit dem Begriff «Polyol» stets ein Polyol wie vorstehend definiert gemeint, d.h. ein Polyol mit einer Funktionalität von 4 oder kleiner und einer Dichte an OH-Gruppen von mindestens 0.033 mol OH pro g Polyol.

Das offenbarte Polyol ist Erythritol Erythritol wird vorliegend als Bezeichnung für Chemikalien verwendet, welche im Wesentlichen aus Buten-1,2,3,4-tetrol bestehen. Alternative Bezeichnungen für Erythritol sind Erythrit und 1,2,3,4-Tetrahydroxybutan. Insbesondere besteht Erythritol im Wesentlichen aus (2S,3R)-Butan-1,2,3,4-tetrol, es können aber auch andere Stereoisomere vorhanden sein. Im Rahmen der vorliegenden Erfindung kann Erythritol z.B. aus chemisch-katalytisch gewonnen Quellen stammen oder aus Quellen der mikrobiellen Umwandlung von Zuckern. Gemäss bestimmter Ausführungsformen wird vorliegend Erythritol mit einer Reinheit von mindestens 80%, bevorzugt mindestens 90%, insbesondere mindestens 95% oder mindestens 99% verwendet. Erythritol wird vorliegend bevorzugt als Pulver verwendet. Erythritol hat eine Funktionalität von 4 sowie eine Dichte an OH-Gruppen von 0.033 mol OH-Gruppen pro g Erythritol.

Ein hydraulisches Bindemittel ist vorliegend ein Bindemittel, welches in Gegenwart von Wasser in einer Hydratationsreaktion abbindet und aushärtet und dabei feste Hydrate oder Hydratphasen bildet. Vorzugsweise sind die gebildeten Hydrate nicht wasserlöslich. Insbesondere finden die Hydratationsreaktionen im Wesentlichen unabhängig vom Wassergehalt statt. Das bedeutet, dass ein hydraulisches Bindemittel auch bei Einwirkung von Wasser, z.B. unter Wasser oder bei hoher Luftfeuchtigkeit, aushärten und seine Festigkeit behalten kann.

Ein Aluminatzement ist vorliegend ein Zement mit einer Hauptphase, die aus hydraulischen Calciumaluminaten besteht, wobei die Hauptphase vorzugsweise CA (CaO · Al2O3) ist. Je nach Aluminatzement sind andere Calciumaluminate wie CA2, C3A, C12A7 ebenfalls vorhanden. Aluminatzemente der vorliegenden Erfindung enthalten typischerweise auch andere Phasen, ausgewählt aus Belit (C2S), Tricalciumsilicat, Ferriten (C2F, C2AF, C4AF) und Ternesit (C5S2$). Aluminatzemente der vorliegenden Erfindung können ferner Calciumcarbonat enthalten. Insbesondere entspricht ein Aluminatzement der vorliegenden Erfindung der Norm EN 14647:2006-01. Eine andere Bezeichnung für Aluminatzemente der vorliegenden Erfindung ist «Tonerdezement». Calciumaluminatzement ist eine besonders häufig verwendete Art von Aluminatzement und im Rahmen der vorliegenden Erfindung speziell bevorzugt. Geeignete Aluminatzemente können z.B. kommerziell von Kerneos SA oder Royal White Cement bezogen werden.

Ein Calciumsulfoaluminat-Zement (CSA) der vorliegenden Erfindung ist ein Zement mit einer Hauptphase, die aus C4(A3-xFx)3$ (4 CaO · 3-x Al2O3 · x Fe2O3 · CaSO4) besteht, wobei x eine ganze Zahl von 0 - 3 ist. CSA der vorliegenden Erfindung enthalten typischerweise weitere Phasen, ausgewählt aus Aluminaten (CA, C3A, C12A7), Belit (C2S), Ferriten (C2F, C2AF, C4AF), Ternesit (C5S2$) und Calciumsulfat. Nach bestimmten Ausführungsformen enthält CSA der vorliegenden Erfindung 25-75 Gew.-% Ye'elimit (C4A3$), 0-10 Gew.-% Aluminate, 0-70 Gew.-% Belit, 0-35 Gew.-% Ferrite, und 0-20 Gew.-% Ternesit, jeweils bezogen auf das Gesamttrockengewicht des CSA-Zements. Geeignetes CSA kann z.B. kommerziell von Heidelberg Cement AG, Vicat SA, oder unter dem Handelsnamen Calumex von Caltra B.V. bezogen werden.

Im Rahmen der vorliegenden Erfindung wird unter Calciumsulfat sowohl das Anhydrit (CaSO₄), als auch das Calciumsulfat-Hemihydrat (CaSO₄ · ½ H₂O) und das Calciumsulfat-Dihydrat (CaSO₄ · 2 H₂O) verstanden. Dabei umfasst das Calciumsulfat-Hemihydrat das alpha- und das beta-Calciumsulfat-Hemihydrat. Calciumsulfat der vorliegenden Erfindung kann sowohl auf REA-Gips, Phospho-Gips, als auch auf Naturgips basieren. In bevorzugten Ausführungsformen wird das alpha-Calciumsulfat-Hemihydrat verwendet.

Unter dem Begriff Portlandzement wird vorliegend ein Zement des Typs CEM I, CEM II, CEM III, CEM IV oder CEM V gemäss Norm EN 197-1:2018-11 verstanden. Ein Portlandzement kann auch eine Mischung dieser Zement-Typen sein. Portlandzemente, die in alternativen Normen beschrieben sind, z.B. ASTM-Normen oder chinesischen Normen, sind gleichermaßen geeignet. Der Klinkergehalt in einem Portlandzement der vorliegenden Erfindung beträgt vorzugsweise mindestens 65 Gew.-%, bezogen auf das Gesamttrockengewicht des Zements. In bestimmten Ausführungsformen der vorliegenden Erfindung beträgt der Klinkergehalt mindestens 80 Gew.-%, bezogen auf das Gesamttrockengewicht des Zements.

Gemäss bestimmter Ausführungsformen umfasst das hydraulische Bindemittel neben Aluminatzement oder Calciumsulfoaluminatzement, Calciumsulfat und optional Portlandzement noch andere Bindemittel. Dies sind insbesondere latent hydraulische Bindemittel und/oder puzzolanische Bindemittel. Geeignete latent-hydraulische und/oder puzzolanische Bindemittel sind z.B. natürliche Puzzolane, Hüttensand, Flugasche, Silikastaub und/oder gebrannter Schiefer. Nach bestimmten Ausführungsformen enthält das hydraulische Bindemittel 6 - 35 Gew.-% latent-hydraulische und/oder puzzolanische Bindemittel.

Gemäss Ausführungsformen umfasst das hydraulische Bindemittel die folgenden Bestandteile
a) Aluminatzement und/oder Calciumsulfoaluminatzement
b) Calciumsulfat, und
c) optional Portlandzement.

Aluminatzement ist bevorzugt gegenüber Calciumsulfoaluminatzement oder Mischungen aus Aluminatzement und Calciumsulfoaluminatzement.

Gemäss bevorzugten Ausführungsformen besteht das hydraulische Bindemittel im Wesentlichen aus den folgenden Bestandteilen
a) Aluminatzement und/oder Calciumsulfoaluminatzement
b) Calciumsulfat, und
c) optional Portlandzement.

Aluminatzement ist bevorzugt gegenüber Calciumsulfoaluminatzement oder Mischungen aus Aluminatzement und Calciumsulfoaluminatzement.

Gemäss Ausführungsformen besteht das hydraulische Bindemittel im Wesentlichen aus den folgenden Bestandteilen
a) Aluminatzement,
b) Calciumsulfat, und
c) optional Portlandzement.

In einer besonderen Ausführungsform bezieht sich die vorliegende Erfindung somit auf die Verwendung mindestens eines Polyols mit einer Funktionalität von 4 oder kleiner und einer Dichte an OH-Gruppen von mindestens 0.033 mol OH pro g Polyol, wobei das Polyol ausgewählt ist aus Erythritol, zur Verringerung des Schwindens einer bauchemischen Zusammensetzung basierend auf einem hydraulischen Bindemittel bestehend aus
a) Aluminatzement,
b) Calciumsulfat, und
c) optional Portlandzement

In einer bauchemischen Zusammensetzung, welche ein hydraulisches Bindemittel umfasst, welches Aluminatzement und/oder Calciumsulfoaluminatzement, Calciumsulfat und Portlandzement umfasst oder im Wesentlichen daraus besteht, beträgt das Gewichtsverhältnis von Aluminatzement und/oder Calciumsulfoaluminatzement zu Portlandzement bevorzugt 10:1 - 1:10, mehr bevorzugt 4:1 - 1:5, ganz besonders bevorzugt von 3:1 - 1:3, insbesondere von 3:1 - 1:1.

Vorteilhafterweise liegt der Anteil an Calciumsulfat am hydraulischen Bindemittel gemäss vorliegender Erfindung im Bereich von 1 - 80 Gew.-%, bevorzugt 10 - 75 Gew.-%, jeweils bezogen auf die gesamte Trockenmasse des hydraulischen Bindemittels.

Gemäss Ausführungsformen besteht das hydraulische Bindemittel daher im Wesentlichen aus den folgenden Bestandteilen (jeweils bezogen auf die gesamte Trockenmasse des Bindemittels)
a) Aluminatzement und/oder Calciumsulfoaluminatzement
b) 1 - 80 Gew.-%, bevorzugt 10 - 75 Gew.-%, Calciumsulfat, und
c) optional Portlandzement.

Vorteilhafterweise liegt in solchen hydraulischen Bindemitteln das Gewichtsverhältnis von Aluminatzement und/oder Calciumsulfoaluminatzement zu Portlandzement, sofern vorhanden, im Bereich von 10:1 - 1:10, mehr bevorzugt 4:1 - 1:5, ganz besonders bevorzugt von 3:1 - 1:3, insbesondere von 3:1 - 1:1.

Es hat sich herausgestellt, dass die Verwendung mindestens eines Polyols mit einer Funktionalität von 4 oder kleiner und einer Dichte an OH-Gruppen von mindestens 0.033 mol OH pro g Polyol in einer bauchemischen Zusammensetzung, welche Aluminatzement und/oder Calciumsulfoaluminatzement und Portlandzement in diesen Verhältnissen enthält, zu einer besonders grossen Verringerung des Schwindes führt.

In einer besonderen Ausführungsform wird Erythritol verwendet zur Verringerung des Schwindens einer bauchemischen Zusammensetzung basierend auf einem hydraulischen Bindemittel umfassend
a) Aluminatzement und/oder Calciumsulfoaluminatzement,
b) 1 - 80 Gew.-%, bevorzugt 10 - 75 Gew.-% Calciumsulfat, und
c) optional Portlandzement,
wobei, wenn Portlandzement vorhanden ist, das Gewichtsverhältnis von Aluminatzement und/oder Calciumsulfoaluminatzement zu Portlandzement im Bereich von 10:1 - 1:10, mehr bevorzugt 4:1 - 1:5, ganz besonders bevorzugt von 3:1 - 1:3, insbesondere von 3:1 - 1:1 liegt.

Es hat sich herausgestellt, dass die Dosierung von Polyol, die zur Verringerung des Schwindes einer erfindungsgemässen bauchemischen Zusammensetzung benötigt wird, von der vorhandenen Menge an Aluminatzement und/oder Calciumsulfoaluminatzement abhängt. Sofern Portlandzement vorhanden ist hängt die benötigte Dosierung von Polyol noch vom Gewichtsverhältnis von Aluminatzement und/oder Calciumsulfoaluminatzement zu Portlandzement ab.

Polyol, wobei das Polyol ausgewählt ist aus Erythritol, wird vorzugsweise in einer Menge von mindestens 0.5 Gew.-%, bevorzugt 1.0 Gew.-%, mehr bevorzugt mindestens 1.2 Gew.-%, bezogen auf die Menge Aluminatzement und/oder Calciumsulfoaluminatzement, eingesetzt.

Weiterhin wird Polyol, wobei das Polyol ausgewählt ist aus Erythritol, vorzugsweise in einer Menge von nicht mehr als 10 Gew.-%, bevorzugt nicht mehr als 6.5 Gew.-%, bezogen auf die Menge Aluminatzement und/oder Calciumsulfoaluminatzement, eingesetzt.

Es hat sich herausgestellt, dass die Verringerung des Schwindens einer bauchemischen Zusammensetzung bei solchen Dosiermengen von Polyol besonders ausgeprägt ist. Es hat sich weiterhin herausgestellt, dass Polyol in diesen Dosiermengen nicht wesentlich zur Entwicklung von VOC beiträgt.

In einem weiteren Aspekt bezieht sich die vorliegende Erfindung auf eine schwundreduzierte bauchemische Zusammensetzung umfassend
a) ein hydraulisches Bindemittel umfassend
   a1) Aluminatzement und/oder Calciumsulfoaluminatzement,
   a2) Calciumsulfat, und
   a3) optional Portlandzement, und
b) mindestens ein Polyol mit einer Funktionalität von 4 oder kleiner und einer Dichte an OH-Gruppen von mindestens 0.033 mol OH pro g Polyol, wobei das Polyol ausgewählt ist aus Erythritol.

Aluminatzement ist dabei bevorzugt gegenüber Calciumsulfoaluminatzement oder Mischungen aus Aluminatzement und Calciumsulfoaluminatzement.

In einer Ausführungsform umfasst die schwundreduzierte bauchemische Zusammensetzung 5 - 70 Gew.-%, bevorzugt 30 - 65 Gew.-%, bezogen auf die Gesamtmasse der bauchemischen Zusammensetzung, eines hydraulischen Bindemittels umfassend Aluminatzement und/oder Calciumsulfoaluminatzement sowie Calciumsulfat.

In einer bevorzugten Ausführungsform umfasst die schwundreduzierte bauchemische Zusammensetzung 5 - 70 Gew.-%, bevorzugt 30 - 65 Gew.-%, bezogen auf die Gesamtmasse der bauchemischen Zusammensetzung, eines hydraulischen Bindemittels bestehend aus Aluminatzement und/oder Calciumsulfoaluminatzement sowie Calciumsulfat, insbesondere bestehend aus Aluminatzement sowie Calciumsulfat. Es handelt sich dabei um ein binäres Bindemittel.

In einer weiteren Ausführungsformen umfasst die schwundreduzierte bauchemische Zusammensetzung 5 - 70 Gew.-%, bevorzugt 30 - 65 Gew.-%, bezogen auf die Gesamtmasse der bauchemischen Zusammensetzung, eines hydraulischen Bindemittels umfassend Aluminatzement und/oder Calciumsulfoaluminatzement, Calciumsulfat sowie Portlandzement. Eine solche schwundreduzierte bauchemischen Zusammensetzung ist dadurch gekennzeichnet, dass das hydraulische Bindemittel Aluminatzement und/oder Calciumsulfoaluminatzement sowie Portlandzement in einem Gewichtsverhältnis von Aluminatzement und/oder Calciumasulfoaluminatzement zu Portlandzement von 10:1 - 1:10, mehr bevorzugt 4:1 - 1:5, ganz besonders bevorzugt von 3:1 - 1:3, insbesondere von 3:1 - 1:1 umfasst.

In einer weiteren bevorzugten Ausführungsformen umfasst die schwundreduzierte bauchemische Zusammensetzung 5 - 70 Gew.-%, bevorzugt 30 - 65 Gew.-%, bezogen auf die Gesamtmasse der bauchemischen Zusammensetzung, eines hydraulischen Bindemittels bestehend aus Aluminatzement und/oder Calciumsulfoaluminatzement, Calciumsulfat sowie Portlandzement, insbesondere bestehend aus Aluminatzement, Calciumsulfat sowie Portlandzement. Es handelt sich dabei um ein ternäres Bindemittel. Eine solche schwundreduzierte bauchemischen Zusammensetzung ist dadurch gekennzeichnet, dass das hydraulische Bindemittel Aluminatzement und/oder Calciumsulfoaluminatzement, vorzugsweise Aluminatzement, sowie Portlandzement in einem Gewichtsverhältnis von Aluminatzement und/oder Calciumsulfoaluminatzement zu Portlandzement von 10:1 - 1:10, mehr bevorzugt von 4:1 - 1:5, ganz besonders bevorzugt von 3:1 - 1:3, insbesondere von 3:1 - 1:1 umfasst.

Das Polyol der schwundreduzierten bauchemischen Zusammensetzung ist ausgewählt aus Erythritol.

In weiteren Ausführungsformen umfasst die schwundreduzierte bauchemischen Zusammensetzung Polyol, wobei das Polyol ausgewählt ist aus Erythritol, in einer Menge von mindestens 0.5 Gew.-%, bevorzugt mindestens 1.2 Gew.-%, bezogen auf die Menge Aluminatzement und/oder Calciumsulfoaluminatzement.

In weiteren Ausführungsformen umfasst die schwundreduzierte bauchemischen Zusammensetzung Polyol, wobei das Polyol ausgewählt ist aus Erythritol, in einer Menge von nicht mehr als 10 Gew.-%, bevorzugt nicht mehr als 6.5 Gew.-%, bezogen auf die Menge Aluminatzement und/oder Calciumsulfoaluminatzement.

In einer Ausführungsform umfasst die schwundreduzierte bauchemische Zusammensetzung
a) 5 - 70 Gew.-%, bevorzugt 30 - 65 Gew.-%, jeweils bezogen auf die Gesamtmasse der bauchemischen Zusammensetzung, eines hydraulischen Bindemittels umfassend
   a1) Aluminatzement,
   a2) Calciumsulfat, und
   a3) optional Portlandzement,
   wobei, wenn Portlandzement vorhanden ist, das Gewichtsverhältnis von Aluminatzement zu Portlandzement im Bereich von 10:1 - 1:10, mehr bevorzugt 4:1 - 1:5, ganz besonders bevorzugt von 3:1 - 1:3, insbesondere von 3:1 - 1:1 liegt, und
b) 0.5 - 10 Gew.-%, bevorzugt 1.2 - 6.5 Gew.-% Erythritol, bezogen auf die Menge an Aluminatzement.

In einer weiteren Ausführungsform umfasst die schwundreduzierte bauchemische Zusammensetzung
a) 5 - 70 Gew.-%, bevorzugt 30 - 65 Gew.-%, jeweils bezogen auf die Gesamtmasse der bauchemischen Zusammensetzung, eines hydraulischen Bindemittels umfassend
   a1) Aluminatzement,
   a2) 1 - 40 Gew.-%, bevorzugt 5 - 33 Gew.-%, insbesondere 10 - 26 Gew.-%, jeweils bezogen auf die gesamte Trockenmasse des Bindemittels, Calciumsulfat, und
   a3) optional Portlandzement,
   wobei, wenn Portlandzement vorhanden ist, das Gewichtsverhältnis von Aluminatzement zu Portlandzement im Bereich von 10:1 - 1:10, mehr bevorzugt 4:1 - 1:5, ganz besonders bevorzugt von 3:1 - 1:3, insbesondere von 3:1 - 1:1 liegt, und
b) 0.5 - 10 Gew.-%, bevorzugt 1.2 - 6.5 Gew.-% Erythritol, bezogen auf die Menge an Aluminatzement.

Erfindungsgemässe bauchemische Zusammensetzungen können ferner Aggregate umfassen. Aggregate können jedes Material sein, das bei der Hydratationsreaktion von hydraulischen Bindemitteln nicht reaktiv ist. Typische Aggregate sind z.B. Gestein, Schotter, Kies, Schlacke, Sand, insbesondere Quarzsand oder Flusssand, gemahlenes Gestein, Recyclingbeton, Glas, Blähglas, Hohlglasperlen, Glaskeramik, Vulkangestein, Bimsstein, Perlit, Vermiculit, Steinbruchabfälle, Porzellan, elektrogeschmolzene oder gesinterte Schleifmittel, Brennhilfsmittel, Siliciumdioxid-Xerogele und/oder feine Zuschlagstoffe wie gemahlener Kalkstein, gemahlener Dolomit und/oder gemahlenes Aluminiumoxid. Aggregate, die für die vorliegende Erfindung nützlich sind, können jede Form und Größe haben, die typischerweise für solche Aggregate anzutreffen sind. Ein besonders bevorzugtes Aggregat ist Sand. Sand ist ein natürlich vorkommendes körniges Material, das aus fein verteiltem Gestein oder Mineralpartikeln besteht. Es ist in verschiedenen Formen und Größen erhältlich. Beispiele für geeignete Sande sind Quarzsand, Kalksteinsand, Flusssand oder gebrochene Gesteinskörnungen. Geeignete Sande sind zum Beispiel in den Normen ASTM C778 oder EN 196-1 beschrieben.

Nach bevorzugten Ausführungsformen ist zumindest ein Teil des Aggregats, welches für eine bauchemische Zusammensetzung der vorliegenden Erfindung verwendet wird, Quarzsand, Flusssand, gemahlenes Gestein, z.B. aus Granit oder Kalkstein, oder Mischungen daraus. Nach einer bevorzugten Ausführungsform wird Flusssand für eine bauchemische Zusammensetzung der vorliegenden Erfindung verwendet, da er chemisch inert, fest, in verschiedenen Grössen verfügbar ist und die Verarbeitbarkeit der Zusammensetzung vorteilhaft eingestellt werden kann. Üblicherweise wird Sand in verschiedenen Fraktionen von Partikeln geliefert, die durch ein Sieb mit freien Öffnungen hindurchgehen. Je nach Ausführung wird für eine bauchemische Zusammensetzung der vorliegenden Erfindung Sand mit 99% Teilchen mit einer Größe von 1 mm oder weniger, vorzugsweise von 0.8 mm oder weniger, insbesondere von 0.6 mm oder weniger, jeweils gemessen nach ASTM C136/ 136M, verwendet. Größere Partikel können zu einer unsachgemäßen Vermischung führen.

Je nach Ausführungsformen kann die bauchemische Zusammensetzung weiterhin Füllstoffe umfassen, welche insbesondere ausgewählt sind unter carbonatischen Füllstoffen, bevorzugt in Form von Calciumcarbonat wie beispielsweise Kalksteinmehl, oder Dolomit.

Eine bauchemische Zusammensetzung der vorliegenden Erfindung umfasst je nach Ausführungsform 10 - 80 Gew.-%, vorzugsweise 25 - 75 Gew.-%, noch bevorzugter 30 - 70 Gew.-%, jeweils bezogen auf das Trockengewicht der bauchemischen Zusammensetzung, an Aggregaten und/oder Füllstoffen.

Ein besonders geeigneter Quarzsand weist eine Sieblinie im Bereich von etwa 0 bis 0.5 mm, bevorzugt im Bereich von etwa 0.08 bis 0.4 mm, auf. Ein weiterer geeigneter Quarzsand weist eine Sieblinie im Bereich von etwa 0.1 bis 1 mm, bevorzugt von etwa 0.2 bis 0.8 mm auf. Ein geeignetes feines Calciumcarbonat weist eine mittlere Partikelgrösse D50 im Bereich von etwa 10 - 50 µm auf. Ein geeignetes Kalksteinmehl hat eine Feinheit von < 0.1 mm.

Die Partikelgröße von feinen Partikeln kann mittels Laserbeugung, wie in ISO 13320:2009 beschrieben, bestimmt werden. Im Besonderen wird ein Mastersizer 2000 Instrument mit einer Hydro 2000G Dispergiereinheit und der Mastersizer 2000 Software von Malvern Instruments GmbH (Deutschland) verwendet. Als Messmedium eignet sich zum Beispiel Isopropanol. Vorzugsweise wird eine Partikelgröße von nicht kugelförmigen oder unregelmäßigen Partikeln durch den äquivalenten Kugeldurchmesser einer Kugel mit äquivalentem Volumen dargestellt. Die durchschnittliche Partikelgröße feiner Partikelentspricht vorliegend dem D50-Wert (50% der Partikel sind kleiner als der angegebene Wert, 50% sind entsprechend größer). Feine Partikel sind dabei Partikel mit einem D50-Wert von < oder gleich 0.1 mm.

Die Sieblinie von groben Partikeln kann durch Siebanalyse bestimmt werden, wie z.B. in der Norm ASTM C136/C136M beschrieben. Bei diesem Verfahren werden feine Partikel von gröberen Partikeln getrennt, indem das Material durch eine Reihe von Sieben mit unterschiedlichen Maschenweiten geleitet wird. Als Ergebnis kann der Prozentsatz der Partikel angegeben, die durch ein Sieb mit einer bestimmten Größe hindurchgehen. Im Folgenden bedeutet die Angabe einer Sieblinie, dass das entsprechende Aggregat aus Partikel mit einer Partikelgrösse innerhalb der angegebenen Grenzen besteht.

Die Baustoffzusammensetzung kann zusätzlich zu den bereits erwähnten Bestandteilen noch weitere übliche Bestandteile, insbesondere Fließmittel, Verdickungsmittel, Farbstoffe und/oder Farbpigmente, Entschäumer, Luftporenbildner, Stabilisierungsmittel, Verzögerer, Beschleuniger, Aktivatoren, Fasern, Chrom(VI)-Reduzierer und/oder Flexibilisierungsmittel, enthalten. Durch den Zusatz solcher an sich bekannter Additive können beispielsweise die Verlaufseigenschaften und das rheologische Verhalten verbessert und an die jeweiligen Anforderungen angepasst, eine Schaumbildung unterdrückt und/oder die Erstarrung (das Aushärten) verzögert werden. Die Gesamtkonzentration solcher Additive beträgt zweckmäßig zwischen 0.1 - 10 Gew.-%, bevorzugt zwischen 0.5 - 5 Gew.-%, und besonders bevorzugt zwischen 1 - 3 Gew.-%, jeweils bezogen auf die Gesamtmasse der Zusammensetzung.

Es ist im Rahmen der vorliegenden Erfindung insbesondere bevorzugt, dass die bauchemische Zusammensetzung keine weiteren organischen Schwindreduzierer enthält. Insbesondere enthält eine bauchemische Zusammensetzung der vorliegenden Erfindung keine Glykole, alkoxylierten Alkohole oder Alkanolamine.

Geeignete Fließmittel sind insbesondere ausgewählt aus der Gruppe bestehend aus Ligninsulfonaten, sulfonierten Vinylcopolymeren, Polynaphthalinsulfonaten, sulfonierten Melaminformaldehydkondensaten, Polyethylenoxidphosphonaten, Polycarboxylatethern oder -estern (PCE) oder Mischungen davon. In bestimmten Ausführungsformen umfasst eine Baustoffzusammensetzung der vorliegenden Erfindung mindestens einen PCE. Geeignete PCE werden beispielsweise beschrieben in EP 2468696. Solche PCE sind besonders gut geeignet, eine gute Verarbeitbarkeit der Baustoffzusammensetzung auch bei niedrigem Wassergehalt zu ermöglichen.

Gemäss bestimmter Ausführungsformen enthält eine erfindungsgemässe Baustoffzusammensetzung noch mindestens ein Verdickungsmittel welches ausgewählt ist aus der Gruppe bestehend aus Stärke, Pektin, Amylopektin, modifizierter Stärke, Cellulose, modifizierter Cellulose, wie Carboxymethylcellulose, Hydroxymethylcellulose, Hydroxyethylcellulose, Methylhydroxyethylcellulose, Kasein, Xanthangummi, Diutangummi, Welangummi, Galaktomannane wie Guargummi, Taragummi, Bockshornkleegummi, Johannisbrotkern- oder Kassia-Gummi, Alginat, Tragantgummi, Dextran, Polydextrose, Schichtsilikaten wie Sepiolith, Bentonit oder Vermiculit und Mischungen davon. Besonders geeignete Verdicker sind Hydroxyethylcellulosen.

Eine erfindungsgemässe Baustoffzusammensetzung umfasst je nach Ausführungsform mindestens einen Verzögerer, ausgewählt aus der Gruppe bestehend aus Zuckersäuren, Zuckern, Zuckeralkoholen, Hydroxycarbonsäuren oder deren Salzen, Phosphaten, Phosphonaten, Boraten und Aminen. Vorzugsweise wird der Verzögerer aus der Gruppe ausgewählt, die aus Gluconsäure, Zitronensäure, Weinsäure oder ihren jeweiligen Natriumsalzen besteht.

Gemäss bestimmter Ausführungsformen umfasst eine erfindungsgemässe Baustoffzusammensetzung noch ein synthetisches organisches Polymer, insbesondere ein synthetisches organisches Copolymer, welches sich von den oben erwähnten Fliessmitteln chemisch unterscheidet. Ein synthetisches organisches Polymer im Rahmen dieser Erfindung kann durch radikalische Polymerisation von Monomeren ausgewählt aus der Gruppe bestehend aus Ethylen, Propylen, Butylen, Isopren, Butadien, Styrol, Acrylnitril, Acrylsäure, Methacrylsäure, Ester der Acrylsäure, Ester der Methacrylsäure, Vinylester, Vinylchlorid hergestellt werden. Es wird bevorzugt, dass synthetische organische Polymere Copolymere sind, die aus zwei oder mehr, vorzugsweise zwei verschiedenen Monomeren synthetisiert werden. Die Reihenfolge der Monomeren im Copolymer kann alternierend, blockweise oder zufällig sein. Bevorzugte synthetische organische Polymere sind Copolymere aus Vinylacetat und Ethylen, Vinylacetat und Ethylen und Methylmethacrylat, Vinylacetat und Ethylen und Vinylester, Vinylacetat und Ethylen und Acrylsäureester, Vinylchlorid und Ethylen und Vinyllaureat, Vinylacetat und Vinylveratatat, Acrylsäureester und Styrol, Acrylsäureester und Styrol und Butadien, Acrylsäureester und Acrylnitril, Styrol und Butadien, Acrylsäure und Styrol, Methacrylsäure und Styrol, Styrol und Acrylsäureester, Styrol und Methacrylsäureester. Die Glasübergangstemperatur (Tg) der genannten synthetischen organischen Polymere kann in einem weiten Bereich variieren. Es ist insbesondere auch möglich, dass das synthetische organische Polymer in Form eines redispergierbaren Polymerpulvers vorliegt. Der Begriff redispergierbares Polymerpulver bezieht sich auf ein Pulver, das ein Polymer enthält und nach Einbringen in Wasser eine stabile Dispersion bildet. Ein redispergierbares Polymerpulver umfasst nicht nur das Polymer, sondern typischerweise auch Mischungen davon mit z.B. Schutzkolloiden, Emulgatoren und Trägermaterialien. Redispergierbare Polymerpulver können z.B. durch Sprühtrocknung von Polymerdispersionen hergestellt werden, wie z.B. in der Patentanmeldung EP 1042391 beschrieben. Geeignete Redispersionspulver sind z.B. bei der Wacker Chemie AG unter dem Handelsnamen Vinnapas erhältlich.

Je nach Ausführungsformen kann die erfindungsgemässe Baustoffzusammensetzung noch Fasern enthalten, insbesondere Stahl-, Glas-, Kunststoff- und/oder Zellulosefasern. Glasfasern und/oder Kunststofffasern werden bevorzugt. Besonders bevorzugte Kunststofffasern sind Polyalkylenfasern, z.B. Polyethylenfasern.

Dem Fachmann ist es ohne weiteres ersichtlich, dass die Mengen der einzelnen Bestandteile in der erfindungsgemäßen Baustoffzusammensetzung je nach Verwendungszweck in weiten Bereichen variieren können und insbesondere auch von der Applikation abhängen. Für eine dicke Schicht der erfindungsgemäßen Baustoffzusammensetzung ist beispielsweise ein Gehalt an hydraulischem Bindemittel im Bereich von etwa 5 - 45 Gew.-%, insbesondere etwa 25 - 40 Gew.-%, jeweils bezogen auf die gesamte Trockenmasse der Baustoffzusammensetzung, ausreichend, während der Gehalt an Füllstoffen in diesem Fall größer sein kann und insbesondere im Bereich von etwa 50 - 80 Gew.-%, vorzugsweise etwa 55 - 70 Gew.-%, und besonders bevorzugt etwa 60 - 65 Gew.%, jeweils bezogen auf die gesamte Trockenmasse der Baustoffzusammensetzung, liegt. Für eine dünne Schicht der erfindungsgemäßen Baustoffzusammensetzung wird hingegen zweckmäßig ein höherer Anteil an Bindemittel, insbesondere im Bereich von etwa 45 - 70 Gew.-%, bevorzugt etwa 50 - 60 Gew.-%, jeweils bezogen auf die gesamte Trockenmasse der Baustoffzusammensetzung, gewählt, während der Füllstoffanteil entsprechend geringer ist und insbesondere im Bereich von etwa 30 - 50 Gew.-%, bevorzugt etwa 40 - 45 Gew.-%, jeweils bezogen auf die gesamte Trockenmasse der Baustoffzusammensetzung, liegt. Eine dicke Schicht bezeichnet im Rahmen dieser Erfindung eine Schicht von 10 mm oder mehr, vorzugsweise 20 mm oder mehr, bis hin zu 60 mm oder mehr. Eine dünne Schicht ist demzufolge eine Schicht, die weniger als 10 mm dick ist und vorzugsweise eine Dicke im Bereich von 1 bis 6 mm aufweist.

In einem weiteren Aspekt bezieht sich die vorliegende Erfindung daher auf eine schwundreduzierte bauchemischen Zusammensetzung umfassend, jeweils bezogen auf die gesamte Trockenmasse der bauchemischen Zusammensetzung,
a) 5 - 70 Gew.-%, bevorzugt 30 - 65 Gew.-%, eines hydraulischen Bindemittels umfassend
   a1) Aluminatzement und/oder Calciumsulfoaluminatzement,
   a2) Calciumsulfat, und
   a3) optional Portlandzement,
b) mindestens ein Polyol mit einer Funktionalität von 4 oder kleiner und einer Dichte an OH-Gruppen von mindestens 0.033 mol OH pro g Polyol, wobei das Polyol ausgewählt ist aus Erythritol,
c) 10 - 80 Gew.-%, vorzugsweise 25 - 75 Gew.-%, noch bevorzugter 30 - 70 Gew.-% Aggregate, insbesondere Sand, und/oder Füllstoffe, insbesondere feines Calciumcarbonat, und
e) optional Additive ausgewählt aus der Gruppe bestehend aus Beschleuniger, Verzögerer, Fliesshilfsmittel, Rheologiehilfsmittel, Verdicker, Pigmente, Biozide.

Aluminatzement ist dabei bevorzugt gegenüber Calciumsulfoaluminatzement oder Mischungen aus Aluminatzement und Calciumsulfoaluminatzement.

Gemäss bestimmter Ausführungsformen besteht eine erfindungsgemässe bauchemische Zusammensetzung, jeweils bezogen auf die gesamte Trockenmasse der bauchemischen Zusammensetzung, aus
a) 5 - 70 Gew.-%, bevorzugt 30 - 65 Gew.-%, eines hydraulischen Bindemittels umfassend
   a1) Aluminatzement und/oder Calciumsulfoaluminatzement,
   a2) Calciumsulfat, und
   a3) optional Portlandzement,
b) 0.5 - 10 Gew.-%, bevorzugt 1.2 - 6.5 Gew.-%, jeweils bezogen auf die Menge an Aluminatzement, Polyol, wobei das Polyol ausgewählt ist aus Erythritol,
c) 10 - 80 Gew.-%, vorzugsweise 25 - 75 Gew.-%, noch bevorzugter 30 - 70 Gew.-% Aggregate, insbesondere Sand und/oder Füllstoffe, insbesondere feines Calciumcarbonat, und
e) optional Additiven ausgewählt aus der Gruppe bestehend aus Beschleuniger, Verzögerer, Fliesshilfsmittel, Rheologiehilfsmittel, Verdicker, Pigmente, Biozide.

Gemäss weiterer bestimmter Ausführungsformen besteht eine erfindungsgemässe bauchemische Zusammensetzung, jeweils bezogen auf die gesamte Trockenmasse der bauchemischen Zusammensetzung, aus
a) 5 - 70 Gew.-%, bevorzugt 30 - 65 Gew.-%, eines hydraulischen Bindemittels umfassend
   a1) Aluminatzement und/oder Calciumsulfoaluminatzement,
   a2) Calciumsulfat, und
   a3) optional Portlandzement,
b) 0.5 - 10 Gew.-%, bevorzugt 1.2 - 6.5 Gew.-%, jeweils bezogen auf die Menge an Aluminatzement, Polyol, wobei das Polyol ausgewählt ist aus Erythritol,
c) 10 - 80 Gew.-%, vorzugsweise 25 - 75 Gew.-%, noch bevorzugter 30 - 70 Gew.-% Aggregate, insbesondere Sand und/oder Füllstoffe, insbesondere feines Calciumcarbonat, und
e) 0.1 - 10 Gew.-% Additiven ausgewählt aus der Gruppe bestehend aus Beschleuniger, Verzögerer, Fliesshilfsmittel, Rheologiehilfsmittel, Verdicker, Pigmente, Biozide.

Gemäss weiterer Ausführungsformen besteht eine schwundreduzierte bauchemischen Zusammensetzung aus,
a) 5 - 70 Gew.-%, bevorzugt 30 - 65 Gew.-%, jeweils bezogen auf die gesamte Masse der Zusammensetzung eines hydraulischen Bindemittels umfassend
   a1) Aluminatzement und/oder Calciumsulfoaluminatzement,
   a2) 1 - 40 Gew.-%, bevorzugt 5 - 33 Gew.-%, insbesondere 10 - 26 Gew.-%, jeweils bezogen auf die gesamte Trockenmasse des Bindemittels, Calciumsulfat, und
   a3) optional Portlandzement,
      wobei das Gewichtsverhältnis von Aluminatzement und/oder
      Calciumsulfoaluminatzement zu Portlandzement, sofern vorhanden, im Bereich von 10:1 - 1:10, mehr bevorzugt 4:1 - 1:5, ganz besonders bevorzugt von 3:1 - 1:3, insbesondere von 3:1 - 1:1liegt
   b) 0.5 - 10 Gew.-%, bevorzugt 1.2 - 6.5 Gew.-%, jeweils bezogen auf die Menge an Aluminatzement, Polyol, wobei das Polyol ausgewählt ist aus Erythritol,
   c) 10 - 80 Gew.-%, vorzugsweise 25 - 75 Gew.-%, noch bevorzugter 30 - 70 Gew.-% Aggregate, insbesondere Sand und/oder Füllstoffe, insbesondere feines Calciumcarbonat, und
   e) optional Additive ausgewählt aus der Gruppe bestehend aus Beschleuniger, Verzögerer, Fliesshilfsmittel, Rheologiehilfsmittel, Verdicker, Pigmente, Biozide.

Eine erfindungsgemässe bauchemische Zusammensetzung kann insbesondere ein Trockenmörtel sein. Die bauchemische Zusammensetzung kann in Form einer 1-komponentigen Zusammensetzung vorliegen. Dies hat den Vorteil, dass Fehler aufgrund von falscher Dosierung von Komponenten und/oder mangelhafter Durchmischung z.B. auf der Baustelle, vermieden werden. Die bauchemische Zusammensetzung kann aber auch in Form einer Mehrkomponenten-Zusammensetzung, z.B. in Form einer 2- oder 3-komponentigen Zusammensetzung vorliegen. Dies kann den Vorteil haben, dass bestimmte Eigenschaften auf die Anforderungen am Ort der Anwendung eingestellt werden können.

Solche bauchemischen Zusammensetzungen werden auch als trockene bauchemische Zusammensetzungen bezeichnet. Trockene bauchemische Zusammensetzung sind demnach vorliegend solche Zusammensetzungen, die weniger als 1 Gew.-%, bevorzugt weniger als 0.1 Gew.-%, bezogen auf das Gesamtgewicht der trockenen Zusammensetzung, an Wasser enthalten.

Eine erfindungsgemässe schwundreduzierte bauchemischen Zusammensetzung kann weiterhin Wasser enthalten oder mit Wasser vermischt werden.

Gemäss bestimmter Ausführungsformen enthält eine erfindungsgemässe bauchemische Zusammensetzung Wasser in einem Wasser/Pulver-Gewichtsverhältnis zwischen 0.1 - 1.0, vorzugsweise 0.15 - 0.6, insbesondere 0.18 - 0.4 enthält. Der Begriff Pulver bezieht sich auf die gesamte trockene bauchemische Zusammensetzung wie oben beschrieben.

Wasser kann jedes verfügbare Wasser sein, wie destilliertes Wasser, gereinigtes Wasser, Leitungswasser, Mineralwasser, Quellwasser und Brunnenwasser. Die Verwendung von Abwasser ist nur in Fällen möglich, in denen die Zusammensetzung dieses Abwassers bekannt ist und in denen keine der enthaltenen Verunreinigungen die Funktionalität eines anderen Bestandteils der Zusammensetzung der vorliegenden Erfindung beeinträchtigen können. Die Verwendung von Salzwasser ist möglich, wird aber wegen des hohen Gehalts an Chloriden und der damit verbundenen Korrosionsgefahr von Stahlbewehrungen nicht bevorzugt.

Typischerweise wird eine trockene, bauchemische Zusammensetzung erst kurz vor ihrer Anwendung mit Wasser gemischt. Dies liegt daran, dass bei Kontakt mit Wasser eine trockene bauchemische Zusammensetzung der vorliegenden Erfindung zu härten beginnt. Es ist daher besonders vorzuziehen, zuerst eine trockene bauchemische Zusammensetzung, insbesondere einen Trockenmörtel, wie oben beschrieben herzustellen und diese trockene bauchemische Zusammensetzung dann am oder nahe dem Ort der Anwendung mit Wasser zu mischen.

Die Methoden und Vorrichtungen zum Mischen der trockenen bauchemischen Zusammensetzung mit Wasser sind nicht besonders beschränkt und dem Fachmann an sich bekannt. Das Mischen kann kontinuierlich, halbkontinuierlich oder diskontinuierlich erfolgen. Das kontinuierliche Mischen bietet den Vorteil eines hohen Materialdurchsatzes.

Eine erfindungsgemässe bauchemische Zusammensetzung kann insbesondere eine feuchte Mörtelmischung sein. Die Konsistenz der feuchten Mörtelmischung kann in weiten Bereichen variieren. Die Konsistenz kann insbesondere eine standfeste, pastöse Masse sein. Die Konsistenz kann aber auch eine fliessfähige oder selbstverlaufende Masse sein. Insbesondere kann die Konsistenz am Ort der Verwendung durch die Beigabe einer geeigneten Menge an Wasser zu einer trockenen bauchemischen Zusammensetzung eingestellt werden.

Die erfindungsgemäße bauchemische Zusammensetzung weist vorzugsweise infolge ihrer Härtung nach 28 Tagen ein Schwinden von nicht mehr als 0,5 mm/m auf, wenn die Härtung bei 20°C und 50-75% relativer Luftfeuchtigkeit und an einem Probekörper der Masse 160 x 40 x 10 mm erfolgt. Im Rahmen der vorliegenden Erfindung bezeichnet ein positiver Wert für das Schwinden eine Ausdehnung der gehärteten Zusammensetzung um den bezeichneten Wert, während ein negatives Schwinden ein Zusammenziehen der Zusammensetzung um den bezeichneten Wert kennzeichnet. Im Rahmen der vorliegenden Erfindung ist das Schwinden gemäß Norm EN 13872:2004-04 zu bestimmen.

Weiterhin ist es bevorzugt, dass die trockene oder die mit Wasser vermischte bauchemische Zusammensetzung einen gesamten TVOC-Gehalt von nicht mehr als 0.5 µg Toluol-Äquivalent/ g, insbesondere von nicht mehr als 0.2 µg Toluol-Äquivalent/ g (TVOC: total volatile organic compound) enthält. Der TVOC-gehalt wird dabei bestimmt nach der GEV-Emicode-Prüfmethode vom 4.4.2019.

Darüber hinaus ist es bevorzugt, wenn die mit Wasser vermischte bauchemische Zusammensetzung bereits nach kurzer Zeit, beispielsweise einem Tag (24 h) unter Normalbedingungen (20°C, 50% r.F., 1013 mbar), eine relativ hohe Druckfestigkeit und Biegezugfestigkeit aufweist.

Offenbart aber nicht beansprucht ist die Verwendung einer schwundreduzierten bauchemischen Zusammensetzung wie oben beschrieben als zementgebundener Fliesenkleber, selbstverlaufende oder standfeste Spachtelmasse, Vergussmaterial, selbstnivellierende Unterlage, selbstnivellierende Schicht, Putz, Reparaturmörtel, Fugenmörtel, Maurermörtel oder Beton, Estrich, Ausgleichsmasse für Innen- oder Außenbereiche, Dünnbettmörtel, Dichtungsmörtel, Dichtungsschlämme, Verankerungsmörtel oder Entkopplungsbahn.

Ein zementgebundener Fliesenkleber entspricht insbesondere der Norm EN 12004-1. Ein Fugenmörtel entspricht insbesondere der Norm EN 13888. Eine selbstnivellierende Unterlage oder eine selbstnivellierende Überdeckung entspricht insbesondere der Norm EN 13813. Ein Putz entspricht insbesondere der Norm EN 998-1. Ein Reparaturmörtel entspricht insbesondere der Norm EN 1504-3. Ein Mauermörtel oder Beton entspricht insbesondere den Normen EN 998-2 und EN 206-1. Ein Estrich entspricht insbesondere der Norm EN 13813. Ein Dünnbettmörtel entspricht insbesondere der Norm EN 998-2. Ein Abdichtungsmörtel entspricht insbesondere der Norm EN 1504-2. Ein Verankerungsmörtel entspricht insbesondere der Norm EN 1504-6.

Typischerweise beziehen sich die Verwendungen auf eine Wasser enthaltende oder mit Wasser vermischte bauchemische Zusammensetzung, d.h. eine bauchemische Zusammensetzung, die auch Wasser in einem Wasser/Pulver-Verhältnis zwischen 0.1 - 1.0, vorzugsweise 0.15 - 0.6, insbesondere 0.18 - 0.4, enthält.

Erfindungsgemässe bauchemische Zusammensetzungen können in einem, vorliegend nicht beanspruchten, Verfahren zum Auftragen eines Baustoffes auf ein Substrat, das die folgenden Schritte umfasst:
- Vermischen der trockenen bauchemischen Zusammensetzungen mit Wasser unter Bildung einer fließfähigen oder pastösen Zusammensetzung,
- Auftragen der fließfähigen oder pastösen Zusammensetzung auf ein Substrat, und
- Aushärten der Zusammensetzung,
verwendet werden.

Vorzugsweise ist die fließfähige oder pastöse Zusammensetzung dabei selbst verlaufend. Des Weiteren ist eine gemäss diesem Verfahren hergestellte fließfähige oder pastösen Zusammensetzung vorzugsweise pumpfähig, so dass sie mit herkömmlichen, aus dem Bereich der Technik bekannten und dort verwendeten Pumpen an beliebige Stellen förderbar ist.

Das Substrat, auf das die fließfähige oder pastöse Zusammensetzung aufgebracht werden kann, unterliegt keinen relevanten Beschränkungen. Das Substrat sollte aber so beschaffen sein, dass die Zusammensetzung nach dem Trocknen fest auf dem Substrat haftet. Als Substrat kommen, neben allen Arten von Standarduntergründen, wie mineralische Estriche oder Trockenestriche, insbesondere Bodenbeläge, wie Holzdielenböden, festliegendes Parkett, Holzspanplatten, Holz-Zement-Platten, Altuntergründe mit keramischen Belägen, Altuntergründe auf der Basis von Estrichen jeglicher Art oder Beton in Betracht, sowie verformungsfreudige Untergründe, wie bituminöser Asphaltestrich. Ein besonders geeignetes Substrat ist ein Anhydritestrich.

Es ist möglich, die Wasser enthaltende oder mit Wasser vermischte bauchemische Zusammensetzung der vorliegenden Erfindung mit allen dem Fachmann bekannten Mitteln aufzutragen. Beispielsweise wird die Wasser enthaltende oder mit Wasser vermischte bauchemische Zusammensetzung mit Kelle, Pinsel oder Rolle aufgetragen. Beispielsweise wird die Wasser enthaltende oder mit Wasser vermischte bauchemische Zusammensetzung im Spritz- oder Sprühverfahren aufgetragen. Beispielsweise wird die Wasser enthaltende oder mit Wasser vermischte bauchemische Zusammensetzung aus einem geeigneten Behälter gegossen.

Spritz- oder Sprühverfahren haben den Vorteil, dass der Auftrag sehr schnell und kontinuierlich erfolgen kann. Geeignete Geräte für solche Verfahren sind dem Fachmann bekannt. Beispielsweise wird ein Spritz- oder Sprühverfahren kontinuierlich durchgeführt. Ein solches Verfahren ist dadurch gekennzeichnet, dass Wasser und eine trockene bauchemische Zusammensetzung der vorliegenden Erfindung kontinuierlich gemischt und kontinuierlich einem Spritz- oder Sprühkopf zugeführt werden. Dies ermöglicht einen kontinuierlichen Spritz- oder Sprühauftrag.

Eine Wasser enthaltende oder mit Wasser vermischte bauchemische Zusammensetzung der vorliegenden Erfindung kann in einer einzigen Schicht oder in mehreren Schichten aufgetragen werden. Das Auftragen in mehreren Schichten hat den Vorteil, dass eine höhere Gesamtschichtdicke erreicht werden kann.

Vor dem Auftragen einer Wasser enthaltenden oder mit Wasser vermischten bauchemischen Zusammensetzung der vorliegenden Erfindung kann eine Grundierung auf das Substrat aufgetragen werden. Es ist auch möglich, eine Grundierung zwischen verschiedenen Schichten einer Wasser enthaltenden oder mit Wasser vermischten bauchemischen Zusammensetzung der vorliegenden Erfindung während eines Mehrschichtauftrags aufzutragen.

Offenbart aber nicht beansprucht sind gehärtete Körper, die beim Abbinden und Aushärten einer Wasser enthaltenden oder mit Wasser vermischten bauchemischen Zusammensetzung der vorliegenden Erfindung erhalten werden. Beispiele beziehen sich insbesondere auf einen ausgehärteten zementgebundenen Fliesenkleber, einen ausgehärteten Fugenmörtel, eine ausgehärtete selbstnivellierende Unterlage, eine ausgehärtete selbstnivellierende Schicht, einen ausgehärteten Putz, einen ausgehärteten Reparaturmörtel, einen ausgehärteten Mauerwerk-Dünnfugenmörtel oder Beton, einen ausgehärteten Estrich, einen ausgehärteten Wandspachtel, einen ausgehärteten nicht schwindenden Fugenmörtel, einen ausgehärteten Dünnfugenmörtel, einen ausgehärteten Abdichtungsmörtel, einen ausgehärteten Verankerungsmörtel oder eine ausgehärtete Entkopplungsbahn wobei der zementgebundene Fliesenkleber, das Vergussmaterial, die selbstnivellierende Unterlage, die selbstnivellierende Überdeckung, der Putz, der Reparaturmörtel, der Mauerwerk-Dünnfugenmörtel oder Beton, der Estrich, der Wandausgleichsmörtel, der nicht schwindende Mörtel, der Dünnfugenmörtel, der Dichtungsmörtel, der Verankerungsmörtel oder die Entkopplungsbahn eine erfindungsgemässe bauchemische Zusammensetzung enthält oder aus einer solchen besteht.

In einem weiteren Aspekt bezieht sich die vorliegende Erfindung auf eine Methode zur Verringerung des Schwindens einer bauchemischen Zusammensetzung basierend auf einem hydraulischen Bindemittel umfassend
a) Aluminatzement und/oder Calciumsulfoaluminatzement
b) Calciumsulfat
c) optional Portlandzement,
dadurch gekennzeichnet, dass die Methode die folgenden Schritte umfasst oder daraus besteht:
(i) Zugabe von mindestens einem Polyol mit einer Funktionalität von 4 oder kleiner und einer Dichte an OH-Gruppen von mindestens 0.033 mol OH pro g Polyol zu der bauchemischen Zusammensetzung,
(ii) Zugabe von Wasser zu der trockenen bauchemischen Zusammensetzung,
(iii) Vermischen der bauchemischen Zusammensetzung
(iv) Applikation der bauchemischen Zusammensetzung, und
(v) optional Aushärten der bauchemischen Zusammensetzung.

Wird ein flüssiges Polyol, insbesondere Glycerin, verwendet, so ist es möglich und in bestimmten Fällen vorteilhaft, wenn das flüssige Polyol vor der Zugabe auf einen festen Träger aufgebracht wird. Insbesondere kann es bevorzugt sein, dass das flüssige Polyol vor der Zugabe auf ein Aggregat, z.B. Sand, oder einen Füllstoff, z.B. Calciumcarbonat, aufgebracht wird. Auf diese Weise ist es möglich, das flüssige Polyol in einer Pulverform zuzugeben.

Die Schritte (i), (ii) und (iii) können dabei insbesondere in irgendeiner Reihenfolge ausgeführt werden. Dies bedeutet, dass das mindestens eine Polyol zur trockenen bauchemischen Zusammensetzung hinzugegeben werden kann oder zu der mit Wasser angemachten Zusammensetzung hinzugegeben werden kann. Die Methode umfasst bevorzugt mehrere Schritte des Vermischens. Insbesondere kann es sinnvoll sein, einen Schritt der Vermischung nach Zugabe von Polyol und einen weiteren Schritt der Vermischung nach Zugabe von Wasser vorzusehen. Dies insbesondere dann, wenn Polyol zur trockenen bauchemischen Zusammensetzung zugegeben wird.

Die bauchemische Zusammensetzung ist dabei insbesondere wie oben definiert. Ganz besonders bevorzugt umfasst die bauchemischen Zusammensetzung, jeweils bezogen auf die gesamte Trockenmasse der bauchemischen Zusammensetzung,
a) 5 - 70 Gew.-%, bevorzugt 30 - 65 Gew.-%, eines hydraulischen Bindemittels umfassend
   a1) Aluminatzement und/oder Calciumsulfoaluminatzement,
   a2) Calciumsulfat, und
   a3) optional Portlandzement,
b) mindestens ein Polyol mit einer Funktionalität von 4 oder kleiner und einer Dichte an OH-Gruppen von mindestens 0.033 mol OH pro g Polyol,
c) 10 - 80 Gew.-%, vorzugsweise 25 - 75 Gew.-%, noch bevorzugter 30 - 70 Gew.-% Aggregate, insbesondere Sand und/oder Füllstoffe, insbesondere feines Calciumcarbonat, und
e) optional Additive ausgewählt aus der Gruppe bestehend aus Beschleuniger, Verzögerer, Fliesshilfsmittel, Rheologiehilfsmittel, Verdicker, Pigmente, Biozide.

In einer besonderen Ausführungsform besteht die schwundreduzierte bauchemische Zusammensetzung aus, jeweils bezogen auf die gesamte Trockenmasse der bauchemischen Zusammensetzung,
a) 5 - 70 Gew.-%, bevorzugt 30 - 65 Gew.-%, eines hydraulischen Bindemittels umfassend
   a1) Aluminatzement und/oder Calciumsulfoaluminatzement,
   a2) Calciumsulfat, und
   a3) optional Portlandzement,
b) mindestens ein Polyol mit einer Funktionalität von 4 oder kleiner und eine Dichte an OH-Gruppen von mindestens 0.033 mol OH pro g Polyol,
c) 10 - 80 Gew.-%, vorzugsweise 25 - 75 Gew.-%, noch bevorzugter 30 - 70 Gew.-% Aggregate, insbesondere Sand und/oder Füllstoffe, insbesondere feines Calciumcarbonat, und
e) optional Additive ausgewählt aus der Gruppe bestehend aus Beschleuniger, Verzögerer, Fliesshilfsmittel, Rheologiehilfsmittel, Verdicker, Pigmente, Biozide.

Gemäss bevorzugter Ausführungsformen bezieht sich die Methode zur Verringerung des Schwindens einer bauchemischen Zusammensetzung auf solche Zusammensetzungen, die Aluminatzement und Portlandzement umfassen und Aluminatzement und Portlandzement in einem Gewichtsverhältnis von Aluminatzement zu Portlandzement von 10:1 - 1:10, mehr bevorzugt 4:1 - 1:5, ganz besonders bevorzugt von 3:1 - 1:3, insbesondere von 3:1 - 1:1 vorliegen.

Gemäss bevorzugter Ausführungsformen bezieht sich die Methode zur Verringerung des Schwindens einer bauchemischen Zusammensetzung auf solche Zusammensetzungen, die Calciumsulfat mit einem Anteil am hydraulischen Bindemittel von 1 - 80 Gew.-%, bevorzugt 10 - 75 Gew.-%, jeweils bezogen auf die gesamte Trockenmasse des Bindemittels, umfassen.

Gemäss bevorzugter Ausführungsformen wird Polyol, insbesondere ausgewählt aus Glycerin oder Erythritol, in einer Methode zur Verringerung des Schwindens einer bauchemischen Zusammensetzung in einer Menge von mindestens 0.5 Gew.-%, bevorzugt mindestens 1.2 Gew.-%, bezogen auf die Menge Aluminatzement und/oder Calciumsulfoaluminatzement, eingesetzt.

Gemäss bevorzugter Ausführungsformen wird Polyol, insbesondere ausgewählt aus Glycerin oder Erythritol, in einer Methode zur Verringerung des Schwindens einer bauchemischen Zusammensetzung in einer Menge von nicht mehr als 10 Gew.-%, bevorzugt nicht mehr als 6.5 Gew.-%, bezogen auf die Menge Aluminatzement und/oder Calciumsulfoaluminatzement, eingesetzt.

Nach dem Mischen mit Wasser beginnt eine bauchemische Zusammensetzung der vorliegenden Erfindung abzubinden und auszuhärten. Das Abbinden und Aushärten einer Wasser enthaltenden oder mit Wasser vermischten bauchemischen Zusammensetzung der vorliegenden Erfindung verläuft mit der Zeit und physikalische Eigenschaften, z.B. Druckfestigkeit, Biegezugfestigkeit, etc. werden dabei entwickelt. Eine Wasser enthaltende oder mit Wasser vermischte bauchemische Zusammensetzung der vorliegenden Erfindung härtet bei verschiedenen Temperaturen aus. Es ist jedoch vorzuziehen, eine Wasser enthaltende oder mit Wasser vermischte bauchemische Zusammensetzung der vorliegenden Erfindung bei Temperaturen zwischen +4°C und +50°C, vorzugsweise zwischen +5°C und +35°C, auszuhärten. Es ist sehr zu bevorzugen, eine Wasser enthaltende oder mit Wasser vermischte bauchemische Zusammensetzung der vorliegenden Erfindung bei einem Druck von ca. 1023 mbar zu härten. Es ist auch möglich, eine Wasser enthaltende oder mit Wasser vermischte bauchemische Zusammensetzung der vorliegenden Erfindung bei höheren Temperaturen und auch unter erhöhtem Druck, zum Beispiel in einem Autoklaven, abzubinden und zu härten. Das Abbinden und das Aushärten sind typischerweise nach 28 Tagen abgeschlossen. Insbesondere in Abhängigkeit von Temperatur, Druck und Feuchtigkeit kann das Abbinden und die Aushärtung jedoch bereits nach weniger als 28 Tagen abgeschlossen sein oder länger als 28 Tage dauern.

Die erfindungsgemäßen Baustoffzusammensetzungen werden nachfolgend anhand von Ausführungsbeispielen näher erläutert. Die Beispiele dienen zur Veranschaulichung und sollen die vorliegende Erfindung in keiner Weise einschränken.

### Ausführungsbeispiele

Die folgende Tabelle 1 enthält eine Übersicht der verwendeten Chemikalien.

**Tabelle 1: verwendete Chemikalien**

| | |
|---|---|
| OPC | CEM I 52,5 R |
| CAC | Calciumaluminatzement (Ternal RG von Imerys) |
| CSA | Calciumsulfoaluminatzement (Alicem von Italcementi) |
| CaSO₄ · ½ H₂O | Alphagips FG 100 (Firma Knauf) |
| Quarzsand | Quarzsand Haltern H35 (Quarzwerke) |
| CaCO₃ | Kalksteinmehl (97.1% CaCO₃, D50 = 23.4 µm) |
| RDP | Redispergierbares Polymerpulver auf Basis Ethylen, Vinylacetat, Vinylversatat (mindestfilmbildungs-T: +5 °C) |
| Glycerin | ACS Reagenz, ≥99.5% Reinheit |
| Erythritol | Sigma-Aldrich (i-Eryhtritol), >99% Reinheit |
| Sorbitol | Sigma-Aldrich, >98% Reinheit |
| Mannitol | Sigma-Aldrich, >98% Reinheit |
| Pentaerythrit | Sigma-Aldrich, 99% Reinheit |
| Additive | Mischung aus Fliessmittel (PCE), Entschäumer (Mineralöl), Verdicker (Zelluloseether), Verzögerer (Fruchtsäure), Beschleuniger (Lithiumcarbonat) |

Das Schwinden wurde gemäss Norm EN 13872:2004-04 bestimmt. Die nachfolgenden Tabellen enthalten Angaben über die Bedingungen und die Dauer bei der Aushärtung der Probekörper sowie über die Dimensionen der jeweils verwendeten Probekörper. In den nachfolgenden Tabellen ist jeweils die Dimensionsänderung des Probekörpers nach dem angegebenen Zeitraum gegeben, wobei positive Werte einer Ausdehnung und negative Werte einem Schwinden gegenüber den ursprünglichen Dimensionen entsprechen. Die maximale Ausdehnung L ist die grösste Ausdehnung, die innerhalb eines Zeitraums von 1h - 28d gemessen wurde. Der Endwert E entspricht der Dimensionsänderung nach 28 Tagen. Die in den nachfolgenden Tabellen angegebenen Verhältnisse von L/E wurden aus den Beträgen der Werte der jeweiligen maximalen Ausdehnung L und des jeweiligen Endwerts E berechnet.

Die Verformung, wie in Tabelle 5 angegeben, wurde in Anlehnung an die EN 13872:2004-04 bestimmt.

TVOC (total volatile organic compounds) wurden gemäss der GEV-Emicode-Prüfmethode vom 4.4.2019 bestimmt.

### Beispiel 1

Es wurden die in Tabelle 2 angegebenen erfindungsgemässen Mischungen 1-1 - 1-4 sowie die nicht-erfindungsgemässen Vergleichsmischungen V-1 und V-2 angefertigt. Dafür wurden OPC, CAC, CaSO₄ · ½ H₂O, Quarzsand, CaCO₃, RDP, Additive und Erythritol in den in Tabelle 2 angegeben Mengen eingewogen und innig vermischt, bis ein optisch homogenes Pulver entstand. Zu dieser Trockenmischung wurde die angegeben Menge an Wasser gegeben und es wurde auf einem IKA-Rührwerk bei 600 U/min für 60 sec vermischt. Die entstandene Masse wurde in prismatische Formen der in Tabelle 2 angegebenen Dimensionen gegossen und bei den angegebenen Bedingungen aushärten gelassen. Das Schwinden wurde nach den in Tabelle 2 angegebenen Zeiten gemessen.

**Tabelle 2: Zusammensetzungen und Ergebnisse Beispiel 1 (Angaben der Rohstoffe in den Zusammensetzungen in g)**

| **Rohstoff** | **V-1** | **1-1** | **1-2** | **1-3** | **V-2** | **1-4** |
|---|---|---|---|---|---|---|
| OPC | 0 | 0 | 0 | 0 | 23 | 23 |
| CSA | 18 | 18 | 18 | 18 | | |
| CAC | | | | | 8 | 8 |
| CaSO₄ · ½ H₂O | 46 | 46 | 46 | 46 | 4 | 4 |
| Quarzsand | 25.8 | 25.8 | 25.8 | 25.8 | 47 | 47 |
| CaCO₃ | 7.5 | 7.5 | 7.5 | 7.5 | 15 | 15 |
| RDP | 2 | 2 | 2 | 2 | 2.5 | 2.5 |
| Additive | 0.9 | 0.9 | 0.9 | 0.9 | 0.5 | 0.5 |
| Erythritol | | 0.1 | 0.25 | 0.50 | | 0.25 |
| Wasser | 22 | 22 | 22 | 25 | 18 | 18 |

| **Schwinden an Proben 160 x 40 x 10 mm @ 20°C/ 55% r.F. [mm/m]** | | | | | | |
|---|---|---|---|---|---|---|
| 1h | +0.07 | -0.05 | -0.03 | -0.05 | -0.1 | -0.1 |
| 24h | -0.05 | -0.3 | -0.05 | -0.1 | -0.25 | -0.15 |
| 7d | -0.2 | -0.45 | -0.31 | -0.35 | -0.42 | -0.31 |
| 28d (Endwert E) | -0.25 | -0.46 | -0.33 | -0.38 | -0.43 | -0.31 |
| Max. Ausdehnung L | +0.18 | -0.05 | -0.03 | -0.05 | -0.1 | -0.1 |
| Verhältnis L/E | 0.72 | 0.11 | 0.09 | 0.13 | 0.23 | 0.32 |

| **Schwinden an Proben 160 x 40 x 10 mm @ 20°C/ 75% r.F. [mm/m]** | | | | | | |
|---|---|---|---|---|---|---|
| 1h | +0.13 | +0.05 | -0.01 | +0.01 | -0.02 | -0.02 |
| 24h | +0.22 | +0.25 | +0.4 | +0.1 | -0.05 | -0.02 |
| 7d | +0.17 | +0.2 | +0.23 | +0.21 | -0.25 | -0.22 |
| 28d | +0.08 | +0.15 | +0.14 | +0.15 | -0.36 | -0.35 |
| Max. Ausdehnung L | +0.29 | +0.25 | +0.4 | +0.21 | -0.02 | -0.02 |
| Verhältnis L/E | 3.63 | 1.67 | 2.85 | 1.4 | 0.06 | 0.06 |

Wie aus den Ergebnissen der Tabelle 2 ersichtlich wird, führt die Verwendung von Erythritol zu einer Verringerung des Verhältnisses L/E. Ein niedriges Verhältnis L/E steht für eine geringe Verformung der erhärtenden bauchemischen Zusammensetzung. Dies ist wünschenswert, da so beispielsweise die Rissbildung vermieden werden kann. Im Fall von bauchemischen Zusammensetzungen mit einem Gehalt an Portlandzement (also basierend auf ternären Bindemitteln) ist das Verhältnis L/E nicht in jedem Fall verbessert (Beispiel 1-4 im Vergleich zu V-2). Allerdings ist in diesen Fällen das Schwindverhalten insgesamt verringert.

### Beispiel 1a

An den Mischungen V-1 und 1-2 aus Beispiel 1 wurden das Ausbreitmass 3 Minuten und 20 Minuten nach dem Anmachen mit Wasser gemessen in Anlehnung an Norm EN 12350-5. Ausserdem wurde der Beginn und das Ende der Abbindezeit gemessen (gemäss der Vicat-Methode wie in der Norm EN 196 beschrieben). Diese Messungen wurden jeweils mit einem frisch hergestellten Pulver sowie mit einem Pulver, welches für 7d bei 20 °C / 55% r.F. offen gelagert wurde, gemessen. Die folgende Tabelle 3 gibt einen Überblick der Ergebnisse.

**Tabelle 3: Messergebnisse zu den Versuchen V-1 (nicht erfinderisch) und 1-2 (erfinderisch).**

| **Eigenschaft** | **V-1** | **1-2** |
|---|---|---|
| Ausbreitmass nach 3 & nach 20 min [cm] | 31.5 & 31.0 | 32.3 & 31.8 |
| *Pulver frisch hergestellt* | | |
| Ausbreitmass nach 3 & nach 20 min [cm] | 33.8 & 30.5 | 33.0 & 33.0 |
| *Pulver gelagert* | | |
| Faktor der Zunahme des Ausbreitmasses zwischen 0 und 7d | 1.07 & 0.98 | 1.02 & 1.04 |
| Abbindezeit, initial & final [min] | 62 & 68 | 76 & 82 |
| *Pulver frisch hergestellt* | | |
| Abbindezeit, initial & final [min] | 144 & 150 | 108 & 114 |
| *Pulver gelagert* | | |
| Faktor der Zunahme der Abbindezeit zwischen 0 und 7d | 2.3 & 2.2 | 1.4 & 1.4 |

Wie aus Tabelle 3 ersichtlich, ist eine erfindungsgemässe bauchemische Zusammensetzung enthaltend Erythritol besser lagerstabil, als dieselbe Zusammensetzung ohne Erythritol.

### Beispiel 1b

Es wurden Mischungen V1-1 und V1-2 hergestellt. Diese entsprechen in ihrer Herstellung und Zusammensetzungen der Mischungen 1-2 aus Beispiel 1. Allerdings wurde für V1-1 Erythritol durch Sorbitol ersetzt und für V1-2 Erythritol durch Mannitol ersetzt.

An den Mischungen V1-1 und V1-2 wurden die Abbindezeiten wie in Beispiel 1a beschrieben gemessen. Die folgende Tabelle 3' gibt einen Überblick der Ergebnisse.

**Tabelle 3': Abbindezeiten der Mischungen 1-2 (erfinderisch) sowie V1-1 und V1-2 (nicht erfinderisch)**

| **Abbindezeit** | **1-2** | **V1-1** | **V1-2** |
|---|---|---|---|
| initial [min] | 76 | > 180 | > 180 |
| final [min] | 82 | > 180 | > 180 |

Wie aus Tabelle 3' ersichtlich führt die Verwendung der nicht erfinderischen Polyole Sorbitol und Mannitol zu einer deutlichen Verzögerung des Abbindens.

### Beispiel 2

Es wurden die in Tabelle 4 angegebenen nicht-erfindungsgemässen Mischungen 2-1 - 2-4 sowie die nicht-erfindungsgemässen Vergleichsmischungen V-3 und V-4 angefertigt. Dafür wurden OPC, CAC, CaSO₄ · ½ H₂O, Quarzsand, CaCO₃, RDP, Additive und Glycerin in den in Tabelle 4 angegeben Mengen eingewogen und innig vermischt, bis ein optisch homogenes Pulver entstand. Zu dieser Trockenmischung wurde die angegeben Menge an Wasser gegeben und es wurde auf einem IKA-Rührwerk bei 600 U/min für 60 sec vermischt. Die entstandene Masse wurde in prismatische Formen der in Tabelle 4 angegebenen Dimensionen gegossen und bei den angegebenen Bedingungen aushärten gelassen. Das Schwinden wurde nach den in Tabelle 4 angegebenen Zeiten gemessen.

**Tabelle 4: Zusammensetzungen und Ergebnisse Beispiel 2 (Angaben der Rohstoffe in den Zusammensetzungen in g)**

| **Rohstoff** | **V-3** | **2-1** | **2-2** | **V-4** | **2-3** | **2-4** |
|---|---|---|---|---|---|---|
| OPC | 23 | 23 | 23 | 20 | 20 | 20 |
| CAC | 8 | 8 | 8 | 20 | 20 | 20 |
| CaSO₄ · ½ H₂O | 4 | 4 | 4 | 10.4 | 10.4 | 10.4 |
| Quarzsand | 46.7 | 46.7 | 46.7 | 29.5 | 29.5 | 29.5 |
| CaCO₃ | 15 | 15 | 15 | 17.5 | 17.5 | 17.5 |
| RDP | 2.4 | 2.4 | 2.4 | 2 | 2 | 2 |
| Additive | 0.6 | 0.6 | 0.6 | 0.9 | 0.9 | 0.9 |
| Glycerin | | 0.2 | 0.5 | | 0.2 | 0.5 |
| **Wasser** | **18** | **18** | **18** | **23.5** | **23.5** | **23.5** |

| **Schwinden an Proben 160 x 40 x 10 mm @ 20°C/ 55% r.F. [mm/m]** | | | | | | |
|---|---|---|---|---|---|---|
| 1h | -0.08 | -0.06 | 0 | +0.03 | +0.01 | +0.01 |
| 24h | -0.19 | -0.08 | 0 | -0.12 | -0.09 | -0.03 |
| 7d | -0.42 | -0.34 | -0.25 | -0.39 | -0.42 | -0.29 |
| 28d | -0.43 | -0.35 | -0.25 | -0.45 | -0.49 | -0.35 |
| Max. Ausdehnung L | -0.08 | -0.06 | 0 | +0.03 | +0.01 | +0.01 |
| Verhältnis L/E | 0.18 | 0.17 | 0 | 0.07 | 0.02 | 0.03 |

| **Schwinden an Proben 160 x 40 x 10 mm @ 20°C/ 75% r.F. [mm/m]** | | | | | | |
|---|---|---|---|---|---|---|
| 1h | -0.03 | 0 | 0 | +0.08 | +0.06 | n.m. |
| 24h | -0.08 | -0.02 | -0.02 | -0.01 | +0.01 | n.m. |
| 7d | -0.24 | -0.06 | -0.06 | -0.19 | -0.19 | n.m. |
| 28d | -0.51 | -0.39 | -0.21 | -0.35 | -0.33 | n.m. |
| Max. Ausdehnung L | -0.03 | 0 | 0 | +0.08 | +0.06 | n.m. |
| Verhältnis L/E | 0.06 | 0 | 0 | 0.23 | 0.18 | n.m. |

| | | | | | | |
|---|---|---|---|---|---|---|
| n.m.: nicht gemessen | | | | | | |

Aus den Ergebnissen der Tabelle 4 wird deutlich, dass in einer bauchemischen Zusammensetzung basierend auf einem hydraulischen Bindemittel umfassend Aluminatzement und Portlandzement mit einem Verhältnis von Portlandzement : Aluminatzement von 2.9:1 bereits eine Dosierung von 2.5 Gew.-% an Glycerin, bezogen auf die Menge an Aluminatzement, ausreicht, um eine deutliche Verringerung des Schwindens zu erzielen (vergleiche Beispiel 2-1 mit V-3). Eine Dosierung von 5 Gew.-% Glycerin verringert das Schwinden in noch grösserem Masse (Beispiel 2-2). Bei einem Verhältnis von Aluminatzement zu Portlandzement von 1:1 reicht eine Dosierung von 1.0 Gew.-% an Glycerin, bezogen auf die Menge an Aluminatzement, nicht aus, um eine Reduktion des Schwindens zu bewirken. Eine Dosierung von 2.5 Gew.-% verringert hingegen das Schwinden auch dieser bauchemischen Zusammensetzung beträchtlich (vergleiche Beispiele 2-2 und 2-4 sowie V-4). Auch die Verhältnisse L/E sind für die bauchemischen Zusammensetzungen umfassend Glycerin jeweils tiefer, als für die Vergleichsmischungen.

### Beispiel 2a

Eine Zusammensetzung wie Beispiel 2-1 aber mit 35 Gew.-% Portlandzement CEM I 42.5 R und ohne Aluminatzement sowie ohne CaSO₄ · ½ H₂O wurde hergestellt. Diese Mischung enthielt 0.2 Gew.-% Glycerin. Bereits 30 Sekunden nach Zugabe von Wasser war die Mischung nicht mehr verarbeitbar, eine Herstellung von Probekörpern zur Messung von Schwund war nicht möglich. Glycerin wirkte in dieser auf Portlandzement-basierten Zusammensetzung als starker Beschleuniger.

### Beispiel 3

Es wurden die in Tabelle 5 angegebenen nicht-erfindungsgemässen Mischungen 3-1 - 3-4 sowie die nicht-erfindungsgemässen Vergleichsmischungen V-5 und V-6 angefertigt. Dafür wurden OPC, CAC, CaSO₄ · ½ H₂O, Quarzsand, CaCO₃, RDP, Additive und Glycerin in den in Tabelle 5 angegeben Mengen eingewogen und innig vermischt, bis ein optisch homogenes Pulver entstand. Zu dieser Trockenmischung wurde die angegeben Menge an Wasser gegeben und es wurde auf einem IKA-Rührwerk bei 600 U/min für 45 sec vermischt. Die entstandene Masse wurde in prismatische Formen der in Tabelle 5 angegebenen Dimensionen gegossen und bei den angegebenen Bedingungen aushärten gelassen. Das Schwinden wurde nach den in Tabelle 5 angegebenen Zeiten gemessen.

**Tabelle 5: Zusammensetzungen und Ergebnisse Beispiel 3 (Angaben der Rohstoffe in den Zusammensetzungen in g)**

| **Rohstoff** | **V-5** | **3-1** | **3-2** | **V-6** | **3-3** | **3-4** |
|---|---|---|---|---|---|---|
| OPC | 13.8 | 13.8 | 13.8 | 5.2 | 5.2 | 5.2 |
| CAC | 41.5 | 41.5 | 41.5 | 25.5 | 25.5 | 25.5 |
| CaSO₄ · ½ H₂O | 9.3 | 9.3 | 9.3 | 10.5 | 10.5 | 10.5 |
| Quarzsand | 27.5 | 27.5 | 27.5 | 55 | 55 | 55 |
| RDP | 7 | 7 | 7 | 2.8 | 2.8 | 2.8 |
| Additive | 1 | 1 | 1 | 1 | 1 | 1 |
| Glycerin | | 0.2 | 0.5 | | 0.2 | 0.5 |
| Wasser | 28 | 28 | 28 | 31.5 | 31.5 | 31.5 |

| **Schwinden an Proben 160 x 40 x 40 mm @ 20°C/ 75% r.F. [mm/m]** | | | | | | |
|---|---|---|---|---|---|---|
| 1h | -0.03 | -0.02 | -0.01 | n.m. | n.m. | n.m. |
| 24h | -1.3 | -1.1 | -0.4 | n.m. | n.m. | n.m. |
| 7d | -2.7 | -2.10 | -2.5 | n.m. | n.m. | n.m. |
| 28d | -3.5 | -4.3 | -3.1 | n.m. | n.m. | n.m. |
| Max. Ausdehnung L | -0.03 | -0.02 | -0.01 | n.m. | n.m. | n.m. |
| Verhältnis L/E | 0.008 | 0.005 | 0.003 | n.m. | n.m. | n.m. |
| Verformung an Proben 1000 x 50 x 10 mm @ 20°C/55% r.F. nach 14d [mm] | 43 | 41 | 27 | 14 | 12 | 10 |
| Verformung an Proben 1000 x 50 x 10 mm @ 20°C/55% r.F. nach 28d [mm] | 43 | 42 | 28 | 14 | 13 | 10 |

| | | | | | | |
|---|---|---|---|---|---|---|
| n.m.: nicht gemessen | | | | | | |

Aus den Ergebnissen der Tabelle 5 wird deutlich, dass in einer bauchemischen Zusammensetzung basierend auf einem hydraulischen Bindemittel umfassend Aluminatzement und Portlandzement mit einem Verhältnis von Aluminatzement zu Portlandzement von 3:1 eine Dosierung von 0.5 Gew.-% an Glycerin, bezogen auf die Menge an Aluminatzement, nicht ausreicht, um eine Verringerung des Schwindens zu erzielen (vergleiche Beispiel 3-1 mit V-5). Eine Dosierung von 1.2 Gew.-% Glycerin verringert das Schwinden hingegen signifikant (Beispiel 3-2). Besonders deutlich wird dies an der gemessenen Verformung. Bei einem Verhältnis von Portlandzement: Aluminatzement von 1:5 reicht eine Dosierung von 0.8 Gew.-% an Glycerin, bezogen auf die Menge an Aluminatzement, ebenfalls nicht aus, um eine signifikante Reduktion des Schwindens zu bewirken (vergleiche Beispiel 3-3 mit V-6). Eine Dosierung von 2 Gew.-% verringert hingegen das Schwinden auch dieser bauchemischen Zusammensetzung beträchtlich (vergleiche Beispiele 3-3 und 3-4 sowie V-6). Auch die Verhältnisse L/E sind für die bauchemischen Zusammensetzungen umfassend Glycerin jeweils tiefer, als für die Vergleichsmischungen.

### Beispiel 4

Die folgende Tabelle 6 gibt eine Übersicht der gemessenen TVOC-Werte einer Ausgleichsmasse, welche gemäss Emicode als EC1+ eingestuft wurde, im mit Wasser angemachten Zustand sowie nach 3 Tagen und nach 28 Tagen der Aushärtung. Ausserdem gibt Tabelle 6 gemessene TVOC Werte von Polyol, ausgewählt aus Glycerin oder Erythritol, sowie von zwei kommerziellen schwundreduzierenden Mittel an. Die beiden kommerziellen schwundreduzierenden Mittel sowie Erythritol wurden sowohl in Substanz (als Pulver) als auch gelöst in Wasser gemessen.

**Tabelle 6: TVOC-Messergebnisse**

| **Probe** | **TVOC** | | |
|---|---|---|---|
| | [µg Toluol-Äquivalent/ g Probe] | | |
| | Niedrig Sieder | Mittel Sieder | Hoch Sieder |
| EC1+ Ausgleichsmasse | 0.15 | 0.09 | 0 |
| 3d Aushärtung | 0 | 0 | 0 |
| 28d Aushärtung | 0.06 | 0 | 0 |
| Glycerin | 0 | 0.40 | 0 |
| Erythritol | 0 | 0 | 0 |
| Erythritol (50% Gew.-% gelöst in H₂O) | 0 | 0 | 0 |
| Schwundreduzierendes Mittel 1 | 0.64 | 2.51 | 0.28 |
| Schwundreduzierendes Mittel 1 (50% Gew.-% gelöst in H₂O) | 0.07 | 1.62 | 0.47 |
| Schwundreduzierendes Mittel 2 | 0.84 | 42.67 | 0 |
| Schwundreduzierendes Mittel 2 (50% Gew.-% gelöst in H₂O) | 0.35 | 62.92 | 0 |

| | | | |
|---|---|---|---|
| Schwundreduzierendes Mittel 1: Sitren^{®} SRA P270 Schwundreduzierendes Mittel 2: Pentachem Pentamix EX3 | | | |

Aus den Ergebnissen der Tabelle 6 wird ersichtlich, dass Glycerin wesentlich geringere TVOC-Mengen freisetzt, als gängige, kommerzielle Schwundreduzierer. Erythritol setzt überhaupt keine TVOC frei. Bei Verwendung von Polyol, wobei Polyol ausgewählt ist aus Erythritol, gemäss der vorliegenden Erfindung ist daher zu erwarten, dass bauchemische Zusammensetzungen kaum zusätzliche TVOC freisetzen.

## Patentansprüche

1. Verwendung mindestens eines Polyols mit einer Funktionalität von 4 oder kleiner und einer Dichte an OH-Gruppen von mindestens 0.033 mol OH pro g Polyol, zur Verringerung des Schwindens einer bauchemischen Zusammensetzung basierend auf einem hydraulischen Bindemittel umfassend
a) Aluminatzement und/oder Calciumsulfoaluminatzement,
b) Calciumsulfat, und
c) optional Portlandzement,
**dadurch gekennzeichnet, dass** das Polyol ausgewählt ist aus Erythritol.

2. Verwendung gemäss einem der vorhergehenden Ansprüche, **dadurch gekennzeichnet, dass** das hydraulische Bindemittel im Wesentlichen aus den folgenden Bestandteilen besteht (jeweils bezogen auf die gesamte Trockenmasse des Bindemittels)
a) Aluminatzement und/oder Calciumsulfoaluminatzement
b) 1 - 80 Gew.-%, bevorzugt 10 - 75 Gew.-%, Calciumsulfat, und
c) optional Portlandzement.

3. Verwendung gemäss wenigstens einem der vorhergehenden Ansprüche, **dadurch gekennzeichnet, dass** das hydraulische Bindemittel Aluminatzement und Portlandzement in einem Gewichtsverhältnis von Aluminatzement zu Portlandzement von 10:1 - 1:10, mehr bevorzugt 4:1 - 1:5, ganz besonders bevorzugt von 3:1 - 1:3, insbesondere von 3:1 - 1:1 umfasst.

4. Verwendung gemäss wenigstens einem der vorhergehenden Ansprüche, **dadurch gekennzeichnet, dass** Polyol in einer Menge von mindestens 0.5 Gew.-%, bevorzugt mindestens 1.2 Gew.-%, bezogen auf die Menge Aluminatzement und/oder Calciumsulfoaluminatzement, eingesetzt wird.

5. Verwendung gemäss wenigstens einem der vorhergehenden Ansprüche, **dadurch gekennzeichnet, dass** Polyol in einer Menge von nicht mehr als 10 Gew.-%, bevorzugt nicht mehr als 6.5 Gew.-%, bezogen auf die Menge Aluminatzement und/oder Calciumsulfoaluminatzement, eingesetzt wird.

6. Schwundreduzierte bauchemische Zusammensetzung umfassend
a) ein hydraulisches Bindemittel umfassend
a1) Aluminatzement und/oder Calciumsulfoaluminatzement,
a2) Calciumsulfat, und
a3) optional Portlandzement, und
b) mindestens ein Polyol mit einer Funktionalität von 4 oder kleiner und einer Dichte an OH-Gruppen von mindestens 0.033 mol OH pro g Polyol,
**dadurch gekennzeichnet, dass** das Polyol ausgewählt ist aus Erythritol.

7. Schwundreduzierte bauchemische Zusammensetzung gemäss Anspruch 6, **dadurch gekennzeichnet, dass** die bauchemische Zusammensetzung 5 - 70 Gew.-%, bevorzugt 30 - 65 Gew.-%, bezogen auf die Gesamtmasse der bauchemischen Zusammensetzung, eines hydraulischen Bindemittels bestehend aus Aluminatzement und/oder Calciumsulfoaluminatzement sowie Calciumsulfat, insbesondere bestehend aus Aluminatzement sowie Calciumsulfat, umfasst.

8. Schwundreduzierte bauchemische Zusammensetzung gemäss Anspruch 6, **dadurch gekennzeichnet, dass** die bauchemische Zusammensetzung 5 - 70 Gew.-%, bevorzugt 30 - 65 Gew.-%, bezogen auf die Gesamtmasse der bauchemischen Zusammensetzung, eines hydraulischen Bindemittels bestehend aus Aluminatzement und/oder Calciumsulfoaluminatzement, Calciumsulfat sowie Portlandzement, insbesondere bestehend aus Aluminatzement, Calciumsulfat sowie Portlandzement, umfasst.

9. Schwundreduzierte bauchemische Zusammensetzung gemäss wenigstens einem der Ansprüche 6 - 8, **dadurch gekennzeichnet, dass** Polyol in einer Menge von mindestens 0.5 Gew.-%, bevorzugt mindestens 1.2 Gew.-%, bezogen auf die Menge Aluminatzement und/oder Calciumsulfoaluminatzement, eingesetzt wird.

10. Schwundreduzierte bauchemische Zusammensetzung gemäss wenigstens einem der Ansprüche 6 - 9, **dadurch gekennzeichnet, dass** Polyol in einer Menge von nicht mehr als 10 Gew.-%, bevorzugt nicht mehr als 6.5 Gew.-%, bezogen auf die Menge Aluminatzement und/oder Calciumsulfoaluminatzement, eingesetzt wird.

11. Schwundreduzierte bauchemische Zusammensetzung gemäss Anspruch 6 umfassend, jeweils bezogen auf die gesamte Trockenmasse der bauchemischen Zusammensetzung,
a) 5 - 70 Gew.-%, bevorzugt 30 - 65 Gew.-%, eines hydraulischen Bindemittels umfassend
a1) Aluminatzement und/oder Calciumsulfoaluminatzement,
a2) Calciumsulfat, und
a3) optional Portlandzement,
b) mindestens ein Polyol mit einer Funktionalität von 4 oder kleiner und eine Dichte an OH-Gruppen von mindestens 0.033 mol OH pro g Polyol,
c) 10 - 80 Gew.-%, vorzugsweise 25 - 75 Gew.-%, noch bevorzugter 30 - 70 Gew.-% Aggregate, insbesondere Sand und/oder Füllstoffe, insbesondere feines Calciumcarbonat, und
e) optional Additive ausgewählt aus der Gruppe bestehend aus Beschleuniger, Verzögerer, Fliesshilfsmittel, Rheologiehilfsmittel, Verdicker, Pigmente, Biozide.

12. Schwundreduzierte bauchemische Zusammensetzung gemäss wenigstens einem der Ansprüche 6 - 11, **dadurch gekennzeichnet, dass** sie Wasser enthält oder mit Wasser vermischt wird, wobei ein Wasser zu Pulver Gewichtsverhältnis zwischen 0.1 - 1.0, vorzugsweise 0.15 - 0.6, insbesondere 0.18 - 0.4 vorliegt.

13. Methode zur Verringerung des Schwindens einer bauchemischen Zusammensetzung basierend auf einem hydraulischen Bindemittel umfassend
a) Aluminatzement und/oder Calciumsulfoaluminatzement
b) Calciumsulfat
c) optional Portlandzement,
**dadurch gekennzeichnet, dass** die Methode die folgenden Schritte umfasst oder daraus besteht:
(i) Zugabe von mindestens einem Polyol mit einer Funktionalität von 4 oder kleiner und einer Dichte an OH-Gruppen von mindestens 0.033 mol OH pro g Polyol zu der bauchemischen Zusammensetzung,
(ii) Zugabe von Wasser zu der trockenen bauchemischen Zusammensetzung,
(iii) Vermischen der bauchemischen Zusammensetzung
(iv) Applikation der bauchemischen Zusammensetzung, und
(v) optional Aushärten der bauchemischen Zusammensetzung, **dadurch gekennzeichnet, dass** das Polyol Erythritol ist und in einer Menge von mindestens 0.5 Gew.-%, bevorzugt mindestens 1.2 Gew.-%, bezogen auf die Menge Aluminatzement und/oder Calciumsulfoaluminatzement, eingesetzt wird.

## Claims

1. Use of at least one polyol having a functionality of 4 or less and an OH group density of at least 0.033 mol OH per g polyol for reducing the shrinkage of a construction chemical composition based on a hydraulic binder comprising
a) aluminate cement and/or calcium sulfoaluminate cement,
b) calcium sulfate, and
c) optionally portland cement,
**characterized in that** the polyol is selected from erythritol.

2. Use according to one of the preceding claims, **characterized in that** the hydraulic binder essentially consists of the following constituents (in each case based on the total dry mass of the binder):
a) aluminate cement and/or calcium sulfoaluminate cement,
b) 1-80% by weight, preferably 10-75% by weight, of calcium sulfate, and
c) optionally portland cement.

3. Use according to at least one of the preceding claims, **characterized in that** the hydraulic binder comprises aluminate cement and portland cement in a weight ratio of aluminate cement to portland cement of from 10:1 to 1:10, more preferably 4:1 to 1:5. very particularly preferably from 3:1 to 1:3, especially from 3:1 to 1:1.

4. Use according to at least one of the preceding claims, **characterized in that** polyol is used in an amount of at least 0.5% by weight, preferably at least 1.2% by weight, based on the amount of aluminate cement and/or calcium sulfoaluminate cement.

5. Use according to at least one of the preceding claims, **characterized in that** polyol is used in an amount of not more than 10% by weight, preferably not more than 6.5% by weight, based on the amount of aluminate cement and/or calcium sulfoaluminate cement.

6. Reduced-shrinkage construction chemical composition comprising
a) a hydraulic binder comprising
a1) aluminate cement and/or calcium sulfoaluminate cement,
a2) calcium sulfate, and
a3) optionally portland cement, and
b) at least one polyol having a functionality of 4 or less and an OH group density of at least 0.033 mol OH per g polyol,
**characterized in that** the polyol is selected from erythritol.

7. Reduced-shrinkage construction chemical composition according to Claim 6, **characterized in that** the construction chemical composition comprises 5-70% by weight, preferably 30-65% by weight, based on the total mass of the construction chemical composition, of a hydraulic binder consisting of aluminate cement and/or calcium sulfoaluminate cement and also calcium sulfate, especially consisting of aluminate cement and calcium sulfate.

8. Reduced-shrinkage construction chemical composition according to Claim 6, **characterized in that** the construction chemical composition comprises 5-70% by weight, preferably 30-65% by weight, based on the total mass of the construction chemical composition, of a hydraulic binder consisting of aluminate cement and/or calcium sulfoaluminate cement, calcium sulfate, and portland cement, especially consisting of aluminate cement, calcium sulfate, and portland cement.

9. Reduced-shrinkage construction chemical composition according to at least one of Claims 6-8, **characterized in that** polyol is used in an amount of at least 0.5% by weight, preferably at least 1.2% by weight, based on the amount of aluminate cement and/or calcium sulfoaluminate cement.

10. Reduced-shrinkage construction chemical composition according to at least one of Claims 6-9, **characterized in that** polyol is used in an amount of not more than 10% by weight, preferably not more than 6.5% by weight, based on the amount of aluminate cement and/or calcium sulfoaluminate cement.

11. Reduced-shrinkage construction chemical composition according to Claim 6, comprising, in each case based on the total dry mass of the construction chemical composition,
a) 5-70% by weight, preferably 30-65% by weight, of a hydraulic binder comprising
a1) aluminate cement and/or calcium sulfoaluminate cement,
a2) calcium sulfate, and
a3) optionally portland cement,
b) at least one polyol having a functionality of 4 or less and an OH group density of at least 0.033 mol OH per g polyol,
c) 10-80% by weight, preferably 25-75% by weight, more preferably 30-70% by weight, of aggregates, in particular sand, and/or fillers, in particular fine calcium carbonate, and
e) optionally additives selected from the group consisting of accelerators, retardants, flow aids, rheological aids, thickeners, pigments and biocides.

12. Reduced-shrinkage construction chemical composition according to at least one of Claims 6-11, **characterized in that** it comprises water or is mixed with water, wherein a water to powder weight ratio of between 0.1-1.0, preferably 0.15-0.6, especially 0.18-0.4, is present.

13. Method for reducing the shrinkage of a construction chemical composition based on a hydraulic binder comprising
a) aluminate cement and/or calcium sulfoaluminate cement,
b) calcium sulfate, and
c) optionally portland cement,
**characterized in that** the method comprises or consists of the following steps:
(i) adding at least one polyol having a functionality of 4 or less and an OH group density of at least 0.033 mol OH per g polyol to the construction chemical composition,
(ii) adding water to the dry construction chemical composition,
(iii) mixing the construction chemical composition,
(iv) applying the construction chemical composition, and
(v) optionally hardening the construction chemical composition,
**characterized in that** the polyol is erythritol and is used in an amount of at least 0.5% by weight, preferably at least 1.2% by weight, based on the amount of aluminate cement and/or calcium sulfoaluminate cement.

## Revendications

1. Utilisation d'au moins un polyol présentant une fonctionnalité de 4 ou moins et une densité de groupes OH d'au moins 0,033 mol d'OH par g de polyol, pour réduire le retrait d'une composition chimique pour la construction à base d'un liant hydraulique comprenant
a) du ciment d'aluminate et/ou du ciment de sulfoaluminate de calcium,
b) du sulfate de calcium, et
c) éventuellement du ciment Portland,
**caractérisé en ce que** le polyol est choisi parmi l'érythritol.

2. Utilisation selon l'une quelconque des revendications précédentes, **caractérisée en ce que** le liant hydraulique est essentiellement constitué des composants suivants (rapportés dans chaque cas à la masse sèche totale du liant)
a) du ciment d'aluminate et/ou du ciment de sulfoaluminate de calcium
b) 1 à 80 % en poids, de préférence 10 à 75 % en poids, de sulfate de calcium, et
c) éventuellement du ciment Portland.

3. Utilisation selon l'une quelconque des revendications précédentes, **caractérisée en ce que** le liant hydraulique comprend du ciment d'aluminate et du ciment Portland dans un rapport pondéral du ciment d'aluminate au ciment Portland de 10:1 à 1:10, de manière davantage préférée de 4:1 à 1:5, de manière tout particulièrement préférée de 3:1 à 1:3, en particulier de 3:1 à 1:1.

4. Utilisation selon l'une quelconque des revendications précédentes, **caractérisée en ce que** le polyol est utilisé en une quantité d'au moins 0,5 % en poids, de préférence d'au moins 1,2 % en poids, par rapport à la quantité de ciment d'aluminate et/ou de ciment de sulfoaluminate de calcium.

5. Utilisation selon l'une quelconque des revendications précédentes, **caractérisée en ce que** le polyol est utilisé en une quantité d'au plus 10 % en poids, de préférence d'au plus 6,5 % en poids, par rapport à la quantité de ciment d'aluminate et/ou de ciment de sulfoaluminate de calcium.

6. Composition chimique pour la construction à retrait réduit comprenant
a) un liant hydraulique comprenant
a1) du ciment d'aluminate et/ou du ciment de sulfoaluminate de calcium,
a2) du sulfate de calcium, et
a3) éventuellement du ciment Portland, et
b) au moins un polyol présentant une fonctionnalité de 4 ou moins et une densité de groupes OH d'au moins 0,033 mol d'OH par g de polyol,,
**caractérisé en ce que** le polyol est choisi parmi l'érythritol.

7. Composition chimique pour la construction à retrait réduit selon la revendication 6, **caractérisée en ce que** la composition chimique pour la construction comprend 5 à 70 % en poids, de préférence 30 à 65 % en poids, par rapport à la masse totale de la composition chimique pour la construction, d'un liant hydraulique constitué de ciment d'aluminate et/ou de ciment de sulfoaluminate de calcium ainsi que de sulfate de calcium, notamment constitué de ciment d'aluminate ainsi que de sulfate de calcium.

8. Composition chimique pour la construction à retrait réduit selon la revendication 6, **caractérisée en ce que** la composition chimique pour la construction comprend 5 à 70 % en poids, de préférence 30 à 65 % en poids, par rapport à la masse totale de la composition chimique pour la construction, d'un liant hydraulique constitué de ciment d'aluminate et/ou de ciment de sulfoaluminate de calcium, de sulfate de calcium ainsi que de ciment Portland, notamment constitué de ciment d'aluminate, de sulfate de calcium ainsi que de ciment Portland.

9. Composition chimique pour la construction à retrait réduit selon l'une quelconque des revendications 6 à 8, **caractérisée en ce que** le polyol est utilisé en une quantité d'au moins 0,5 % en poids, de préférence d'au moins 1,2 % en poids, par rapport à la quantité de ciment d'aluminate et/ou de ciment de sulfoaluminate de calcium.

10. Composition chimique pour la construction à retrait réduit selon l'une quelconque des revendications 6 à 9, **caractérisée en ce que** le polyol est utilisé en une quantité d'au plus 10 % en poids, de préférence d'au plus 6,5 % en poids, par rapport à la quantité de ciment d'aluminate et/ou de ciment de sulfoaluminate de calcium.

11. Composition chimique pour la construction à retrait réduit selon la revendication 6 comprenant, rapportés dans chaque cas à la masse sèche totale de la composition chimique pour la construction,
a) 5 à 70 % en poids, de préférence 30 à 65 % en poids, d'un liant hydraulique comprenant
a1) du ciment d'aluminate et/ou du ciment de sulfoaluminate de calcium,
a2) du sulfate de calcium, et
a3) éventuellement du ciment Portland,
b) au moins un polyol présentant une fonctionnalité de 4 ou moins et une densité de groupes OH d'au moins 0,033 mol d'OH par g de polyol,
c) 10 à 80 % en poids, de préférence 25 à 75 % en poids, de manière encore préférée 30 à 70 % en poids, d'agrégats, notamment de sable et/ou de charges, notamment de carbonate de calcium fin, et
e) en option, des additifs choisis dans le groupe constitué d'accélérateurs, de retardateurs, d'adjuvants d'écoulement, d'adjuvants rhéologiques, d'épaississants, de pigments et de biocides.

12. Composition chimique pour la construction à retrait réduit selon l'une quelconque des revendications 6 à 11, **caractérisée en ce qu'**elle contient de l'eau ou est mélangée avec de l'eau, un rapport pondéral eau/poudre de 0,1 à 1,0, de préférence de 0,15 à 0,6, en particulier de 0,18 à 0,4 étant présent.

13. Procédé de réduction du retrait d'une composition chimique pour la construction à base d'un liant hydraulique comprenant
a) du ciment d'aluminate et/ou du ciment de sulfoaluminate de calcium
b) du sulfate de calcium
c) éventuellement du ciment Portland,
**caractérisé en ce que** la méthode comprend les étapes suivantes ou consiste en celles-ci :
(i) l'ajout d'au moins un polyol présentant une fonctionnalité de 4 ou moins et une densité de groupes OH d'au moins 0,033 mol d'OH par g de polyol à la composition chimique pour la construction,
(ii) l'ajout d'eau à la composition chimique pour la construction sèche,
(iii) le mélange de la composition chimique pour la construction.
(iv) l'application de la composition chimique pour la construction, et
(v) le durcissement, en option, de la composition chimique pour la construction,
**caractérisé en ce que** le polyol est de l'érythritol et est utilisé en une quantité d'au moins 0,5 % en poids, de préférence d'au moins 1,2 % en poids, par rapport à la quantité de ciment d'aluminate et/ou de ciment de sulfoaluminate de calcium.
